(19) Europäisches Patentamt
European Patent Office
Office européen des brevets

(11) Publication number: **0 662 492 A1**

(12) # EUROPEAN PATENT APPLICATION

(21) Application number: **94203772.2**

(51) Int. Cl.[6]: **C08J 5/24**, C04B 38/00

(22) Date of filing: **28.12.94**

(30) Priority: **28.12.93 JP 336981/93**
**13.04.94 JP 75183/94**

(43) Date of publication of application:
**12.07.95 Bulletin 95/28**

(84) Designated Contracting States:
**DE ES FR GB IT NL**

(71) Applicant: **NIKKISO CO., LTD.**
**No. 43-2, Ebisu 3-chome**
**Shibuya-ku**
**Tokyo 150 (JP)**

(72) Inventor: **Asada, Shinya**
**1667-22, Sumiyoshi,**
**Yoshida-cho**
**Haibara-gun,**
**Shizuoka (JP)**
Inventor: **Nakamura, Hiroyuki**
**1-13-6, Aobadai,**
**Kikugawa-cho**
**Ogasa-gun,**
**Shizuoka (JP)**
Inventor: **Miyamichi, Kazuo**
**4-7-11, Sekimae**
**Musashino-shi,**
**Tokyo (JP)**
Inventor: **Yates, Derek N.**
**4530 Southwest Chunut Court**
**Tualatin,**
**Oregon 97062 (US)**

(74) Representative: **Hooiveld, Arjen Jan Winfried et al**
**Trenité van Doorne,**
**De Lairessestraat 133**
**NL-1075 HJ Amsterdam (NL)**

(54) **Fire-safe panels, fixtures and laminated honeycomb structures of fiber-reinforced ceramic material.**

(57) The present invention relates to a prepreg, a preformed prepreg, a fired prepreg, a redensified prepreg and methods of constructing these materials. Further, the invention pertains to a fire-safe panel comprising a ceramic fiber-reinforced material, a fire-safe fixture comprising a ceramic fiber-reinforced material, a laminated honeycomb material containing a fiber-reinforced ceramic material, or composites constructed from such materials.

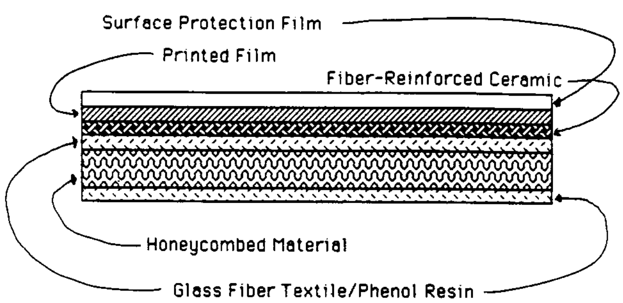


**Figure 5**

EP 0 662 492 A1

## CROSS-REFERENCE TO RELATED APPLICATION

This application is a continuation-in-part of pending application Serial No. 08/267,204, filed July 6, 1994.

## BACKGROUND OF THE INVENTION

### Field of the Invention:

The present invention relates generally to fire-safe structures and, more particularly, to fire-safe panels, fixtures and laminated honeycomb structures of ceramic fiber-reinforced material for use in enclosed vehicles, building structures and other like applications.

### Background Information and Description of Related Art:

Fire and the toxic fumes and smoke produced by the combustion of flammable materials pose severe dangers to occupants of building structures and enclosed vehicles, such as aircraft, spacecraft, watercraft and land vehicles. Such fires are often caused by burst fuel tanks, electrical short circuits, friction or sparks, engine malfunctions or lightening strikes. The prevalence of these conditions, and the seriousness of the injuries resulting from fire, toxic fumes and smoke are such that protection of occupants is a major concern.

The best way to protect occupants of buildings and enclosed vehicles from such dangers is to prevent the fire, and the resultant heat, toxic gas, and smoke from traversing the boundaries of the structure, either by spreading from the outside of the structure to the inside or spreading within the structure from one section or compartment to another. This can be accomplished by the use of firewalls. Another way is to avoid the use of flammable materials. For these purposes, many materials now utilized in building and vehicle construction have been designed to have either low flammability or fire retardant properties.

It is also important that materials for applications such as the above be lightweight. Thus, it is common that plastics are utilized. However, most plastics, even if formulated to have fire resisting or fire retarding properties, burn at high temperature and generate toxic gases by degradation of the fire retarding agents which are blended in the plastics and which contain halogen, phosphorous, or nitrogen. Thus, while plastic materials satisfy the requirement for lightweight structures, they do not achieve the desired result of protecting the occupants of buildings and enclosed vehicles from exposure to flame, heat, toxic gases and smoke.

Even if the risk of fire cannot be entirely eliminated, hampering the spread of fire and reducing emissions of toxic fumes and smoke lessens the risk of injury and death by permitting safe evacuation of occupants, from building structures and enclosed vehicles. For example, in an aircraft fire, if the spread of fire within an aircraft is delayed such that it will not engulf the passenger and crew compartments in less than 2 minutes, then the passengers and crew should have enough time to escape safely and avoid or substantially reduce injuries.

Indeed, the Federal Aviation Administration's, Department of Transportation Regulation 14 C.F.R. 25.803 prescribes a safety standard in which an aircraft having more than 44 passenger seats must be designed to permit evacuation in 90 seconds in an emergency. Materials employed in aircraft are required to meet this safety standard. Materials meeting such safety standards would also be useful in the construction of trains, automobiles, vehicles, passenger coaches, and other enclosed vehicles and structures.

Conventionally, such fire-resistant materials include plastics because their low density and high strength permit application of the materials in demanding environments. However, even fire-resistant and fire-retardant plastics ignite at high temperatures and frequently generate toxic gases. Accordingly, existing flame-resistant or fire-retardant plastics are ineffective in protecting occupants, passengers and crew of a structure.

The panels of a structure serve many functions. They may be load-bearing, soundproof, thermally insulating or possessed of particular mechanical strength. To achieve such ends, panels are frequently constructed in laminated honeycomb form, as a fiber-reinforced plastic plate, or as a preformed laminated prepreg structure. These materials are commonly further processed by laminating an adhesive agent, a cushion material, an ink-film layer, and a protection film as circumstances demand.

In light of the shortcomings of plastics in such demanding environments, attempts have been made to employ ceramic materials as components of panels and laminated structures. However, conventional ceramics do not possess all of the desired physical and mechanical characteristics required of a panel. Although ceramics have excellent heat resistance, strength at high temperatures, and acid resistance, relative to organic materials and metals, conventional ceramics do not have satisfactory impact strength.

To improve the impact strength of ceramics, while maintaining the advantages of these materials, various approaches for increasing impact resistance have been investigated, including a particle dispersion method, a whisker or short-fiber reinforcing method, and a long-fiber reinforcing method. Although the particle dispersion method and the whisker reinforcing method improve impact strength to a degree, partial fractures in the ceramic rapidly propagate throughout the overall body.

The long-fiber reinforcing method does significantly improve impact strength relative to the two other methods. Further, long-fiber reinforced ceramics resist the rapid propagation of fractures, even if the ceramics are stress-loaded, because the fiber reinforcement bears the load. However, there is no commercially available long fiber that has satisfactory strength at temperatures of 1,200° C. or higher in air and 1,400° C. or higher in an inert atmosphere. Moreover, a fiber-reinforced ceramic material which can be manufactured at low temperatures would be advantageous because of significantly reduced manufacturing costs. Thus, there is a need for a fiber-reinforced ceramic material which can be manufactured at 1,200° C. or lower, preferably 1,000° C. or lower.

It is also desirable that a fiber-reinforced ceramic material possess other physical and mechanical characteristics. For example, a fiber-reinforced ceramic material manufactured from a prepreg possessing superior "tack" and "drape" characteristics would permit production of ceramic materials with a curved or complicated shape. The term "tack" refers to the adhesive stickiness of a material and the term "drape" refers to the ability of a substance to conform to the shape of an object to which the substance is applied. It would also be commercially advantageous if the prepreg could be fired in a free-standing state, meaning heat-fired as a free-standing object without a deformation-preventing countermeasure, such as a mold or press. Additionally, it would be desirable if the firing step in the manufacture of the fiber-reinforced ceramic material could be carried out in air, rather than in an inert atmosphere or vacuum, which are expensive and inconvenient alternatives.

Conventionally, a fiber-reinforced ceramic material can be manufactured by forming a ceramic matrix among fibers. A variety of matrix-forming methods are known, including chemical vaporization and direct metal oxidation. Either of these methods can be adapted to the production of short-fiber or long-fiber reinforced ceramics.

Chemical vaporization furnishes a fiber-reinforced ceramic material by precipitating and depositing a ceramic matrix in the gaps among the fiber bundles. This method is described in J.T. Hoyt et al., SAMPE J. 27, No. 2, p.11 (1991). Although this method permits the formation of a ceramic matrix at relatively low temperatures, for example, 1,000° C. to 1,200° C., it is problematic in that approximately one hundred hours are required to form the matrix, that the number and amount of voids (the void ratio) are substantial and cannot be lowered, and that a complicated shape cannot easily be formed.

Direct metal oxidation produces a fiber-reinforced ceramic material by bringing molten metal into contact with preformed structures (preforms) of reinforced fibers and converting the metal into ceramic material by oxidation or nitrification. This method has been discussed in, for example, M. S. Newkirk et al., J. Mater. Sci., 1, 81 (1986), among others. Although this method is advantageous in that a variety of ceramic matrices can be formed by varying the metal and the heating atmosphere, free metal remains in the product, compromising the strength of the product at high temperatures. Moreover, the method cannot easily produce a product having a complicated shape.

In the prepreg method of manufacturing long-fiber reinforced ceramics, a prepreg is laminated and molded to have the predetermined shape of the product and subsequently fired to convert the matrix components of the prepreg into a ceramic material. The term 'prepreg' refers to reinforcing materials that contain or are combined with a full complement of resin before the molding operation. To construct the prepreg, various methods have been employed, including slurry impregnation, sol-gel conversion, and polymer heat decomposition.

Slurry impregnation constructs a prepreg by impregnating a fiber with a slurry solution containing ceramic particles and a binder, such as an organic polymer. Subsequently, the binder is burned out and the prepreg is thermal-pressed in an inert atmosphere. This method has been discussed in, for example, C.A. Doughan et al., Ceram. Eng. Sci. Proc., 10, 812 (1989). Although this method produces a fiber-reinforced ceramic material having superior mechanical characteristics, high temperatures of 1,500° C. to 1,800° C. and high pressures of 100 to 350 kg/cm$^2$ are required. Under such conditions, most conventional reinforcing fibers deteriorate. Further, organic materials in the prepreg are carbonated, form volatiles, or undergo thermal contraction. Accordingly, matrix performance is compromised and cracks and voids are generated throughout the ceramic material. Additionally, this method employs water as a medium. Unfortunately, water is strongly adsorbed in the ceramic material and cannot easily be removed with heat. Further, the prepreg does not have satisfactory tack characteristics.

Sol-gel conversion is a prepreg construction method in which a metal alkoxide serving as a fluid material is, in the presence of an acid or an alkali, hydrolyzed and condensed, converting from a sol state to a gel state. The resultant material is subsequently heated to form a ceramic material. This method can produce a ceramic material at temperatures of 1,000° C. or lower. However, in the sol-gel method, the volume of the material contracts considerably upon conversion to a dry gel and, consequently, voids, cracks and fractures are generated throughout the material during firing. This contraction in volume can reach tens of percent. These problems are discussed in Japanese Laid-Open Patent No. 282131/1988.

Polymer heat decomposition constructs a prepreg by impregnating fibers with an organic polymer, such as polycarbosilane or polysilazane. The resultant prepreg is laminated, preformed, and fired to form a ceramic matrix. This method has been discussed in Okamura, Japan Composite Material Society, 11, 99 (1985). Although this method produces a ceramic material at temperatures of 1,200° C. or lower, considerable contraction occurs when the organic polymer is transformed into a ceramic matrix as a consequence of thermal decomposition of the organic polymer. Moreover, the organic polymers do not produce satisfactory tack characteristics: and, thus, molding is problematic.

These three methods of manufacturing a long-fiber reinforced ceramic material have been extensively discussed in the technical literature.

For example, Chen et al., ECCM, p. 89, 20-23 March 1988, produced a fiber-reinforced ceramic material by impregnating a carbon or silicon carbide fiber with a sol solution containing Boehmite and alumina powder having a diameter of 0.5 µm, drying at 50° C. for 20 hours, subsequently raising the temperature to 1,000° C. in a nitrogen atmosphere, and hot-pressing the prepreg with a graphite die at 1,200° C. to form a ceramic material. The ceramic underwent substantial contraction during heating and firing.

Hurwitz et al., Ceram. Eng. Sci. Proc., 10, 750 (1989), produced prepregs by means of a filament winding method in which polysilsesquioxane was employed as the matrix precursor and silicon carbide fiber as the reinforcing fiber. The prepregs were stacked in a metal die, heated at 70° C. and 689 Pa for 2 hours, at which time the temperature was raised to 180° C. and maintained for 1.5 hours. The resultant material was removed from the die and heated at 525° C., 1,000° C. or 1,200° C. in an argon gas flow. They confirmed that polyvinyl (50%) methyl (50%) silsesquioxane had a thermal contraction ratio of 19%, that polyphenyl (50%) methyl (50%) silsesquioxane had a thermal contraction ratio of 13%, and that numerous cracks formed on the surfaces of the matrix and in the matrix regions between fibers.

Kang Chi et al., Japanese Patent Publication No. 18350/1988, disclosed a method of manufacturing a fiber-reinforced ceramic in which high modulus fibers were impregnated with a thermal preforming organosilicone resin. The resultant prepregs were partially preformed at a temperature not higher than 300° C., further preformed and post-preformed, and then fired at 1,000° C. or higher, either in an inert atmosphere or in a vacuum. Additionally, in Japanese Patent Publication No. 77138/1991, prepregs were manufactured by impregnating a high modulus fiber with either a mixture of an organic silsesquioxane sol and a colloidal metal oxide or a mixture of organic silsesquioxane sol and metal alkoxide, and then heating to furnish a fiber-reinforced ceramic material. However, satisfactory tack characteristics were not achieved and, accordingly, it was difficult to produce a curved or complicated shape. Further, separation of the layers occurred easily. In addition, three preforming steps, including post-preforming, were required to preform the prepreg completely. Thus, the manufacturing process is labor- and time-intensive. Moreover, the inert atmosphere or vacuum necessary for firing limits manufacturing flexibility and raises costs.

Han et al., WO92/22509, disclosed a ceramic binder composition having satisfactory tack and drape characteristics, comprising a polymer, such as polymethyl methacrylate; a monomer, such as trimethylolpropane trimethacrylate; a peroxide, such as dicumyl peroxide; and a solvent, such as acetone. In this method a slurry solution, obtained by mixing a binder composition, a ceramic component (such as alumina), and inorganic fibers (such as alumina fibers), was preformed between 148° C. and 170° C., fired at a temperature below 480° C. to remove the binder, and further fired at 500° C. to 2,500° C. This method employs, as a binder for the ceramic particles, a cross-linking agent/co-cross-linking agent system conventionally used in vulcanizing rubber or cross-linking an organic polymer. The resultant prepreg had satisfactory tack and drape characteristics. However, the binder is an organic composition, similar to the polymer binder in the slurry impregnation method and, accordingly, the bond between ceramic particles rapidly deteriorated after the firing step either volatized or decomposed the binder.

As described above, the conventional methods of manufacturing a reinforced ceramic material possess a number of shortcomings, including (1) the necessity of firing at high temperatures, (2) long manufacturing times, (3) difficulties in firing at atmospheric pressure in a non-fixed state, (4) obstacles in manufacturing complicated shapes, (5) the necessity of firing in an expensive and inconvenient inert atmosphere or vacuum, (6) substantial contraction of the matrix during heating, and (7) generation of a multiplicity of cracks throughout the fired body. These problems have prevented the broad use of fiber-reinforced ceramic

materials in structures.

Thus, the usefulness of conventional ceramic fiber-reinforced materials is limited. For example, there remains a need for a ceramic fiber-reinforced material which can serve as a component in a fire-safe panel or a fire-safe fixture. Further, there is a need for a laminated honeycomb material containing an effective ceramic fiber-reinforced material.

## SUMMARY OF THE INVENTION

The present invention results from applicants discovery of a new ceramic fiber-reinforced material that makes it possible to provide fire-safe panels, fixtures and laminated honeycomb structures. Thus, the present invention broadly provides fire-safe panels, fixtures and honeycomb structures having at least one member formed of a ceramic fiber-reinforced material. Preferably, the ceramic fiber-reinforced material is prepared by firing at least one prepreg formed by impregnating an inorganic fiber with a matrix composition of a powdered metal oxide having an average diameter less than 1 $\mu$m, a soluble siloxane polymer having a double chain structure, a trifunctional silane compound containing at least one ethylenically unsaturated double bond, an organic peroxide, and a monomer containing at least two ethylenically unsaturated double bonds and capable of undergoing radical polymerization.

Panels, fixtures and laminated honeycomb structures constructed in accordance with the present invention are lightweight, possess advantageous properties of structural rigidity, fire resistance, smoke and toxic gas impermeability, and other suitable characteristics for applications where fire-safe elements are required.

An object of the present invention is to provide lightweight, fire-safe panels, fixtures and laminar structures which may be easily manufactured and which are suitable for hazardous environments in which an effective barrier to fire, smoke and gases is required.

A further object of the present invention is to provide fire-safe panels, fixtures and laminated honeycomb structures for use in building structures and in closed vehicles, such as aircraft, spacecraft, watercraft and land vehicles.

To achieve the aims of the present invention, the present inventors undertook a program of research directed to developing a fire-safe panel and a fire-safe fixture, the components of which are constructed of a ceramic fiber-reinforced material. Such ceramic fiber-reinforced materials would have to be capable of forming complicated profiles and shapes from a prepreg possessing superior tack and drape characteristics and which maintains such tack and drape properties for a suitably long period. Moreover, the inventors recognized that such a ceramic fiber-reinforced material would have to possess substantial impact strength, be essentially free of voids within the ceramic matrix, and not undergo significant contraction during firing. The inventors discovered that such a ceramic fiber-reinforced material could be produced by impregnating or heat-penetrating a tow, sheet or cloth of inorganic fiber with a matrix composition comprising:

| | |
|---|---|
| component (A), | which comprises a fine powder of a metal oxide having an average particle size of 1 $\mu$m or less; |
| component (B), | which comprises a soluble siloxane polymer having a double chain structure; |
| component (C), | which comprises a trifunctional silane compound containing at least one ethylenically unsaturated double bond; |
| component (D), | which comprises an organic peroxide; and |
| component (E), | which comprises a monomer containing at least two ethylenically unsaturated double bonds and capable of undergoing radical polymerization; |

and suitable solvents and additives.

The prepreg is subsequently molded with heat and pressure, strongly cross-linking the matrix composition and converting the prepreg into a fiber-reinforced preformed material exhibiting superior bonding between the fibers and the matrix. The preformed ceramic material can then be fired at atmospheric pressure in a non-fixed state in air, conditions easily employed in an industrial environment. The fired ceramic material can then be further strengthened by a redensification process, in which small voids formed during firing are filled by impregnating the fired material with a fluid containing at least one of the components of the matrix composition and firing again.

With such ceramic fiber-reinforced materials, neither contraction nor alteration of the shape occur to any significant extent during firing. Thus, the ceramic fiber-reinforced material can be easily manufactured into a variety of shapes and is particularly well suited for use as a component of a fire-safe panel, fire-safe fixture, or fire-safe laminar honeycomb structure in building structures and enclosed vehicles exposed to the hazards of fire, smoke and toxic fumes.

Other objects and advantages of the present invention will become apparent from the following description of the preferred embodiments when taken in conjunction with the accompanying drawings.

BRIEF DESCRIPTION OF THE DRAWINGS

Figure 1 illustrates a cut-away view of an airplane;
Figure 2 illustrates a portion of the cross-section of an aircraft along line IV of Figure 1;
Figure 3 illustrates the seats in an airplane;
Figure 4 illustrates a part of the inner wall of an aircraft;
Figure 5 illustrates a cross-sectional view along line A-A in Figure 4;
Figure 6 illustrates a portion of the shelf structure in Figure 2;
Figure 7 illustrates a cross-sectional view along line B-B of Figure 6;
Figure 8 illustrates a cross-sectional view of an automobile;
Figure 9 illustrates a partial cross-section of a building;
Figure 10 illustrates a view of a room;
Figure 11 illustrates a cross-section of a laminated honeycomb structure containing two fiber-reinforced ceramic sheets;
Figure 12 illustrates a cross-section of a laminated structure containing two fiber-reinforced ceramic sheets;and
Figure 13 illustrates a sectional view of a honeycombed structure containing two fiber-reinforced ceramic sheets.
Figure 14 illustrates a plan view of a ship.
Figure 15 illustrates side elevation showing in outline form a space craft broken away to depict a portion of the interior structure.

DESCRIPTION OF THE PREFERRED EMBODIMENTS

The present invention will now be described in detail with reference to the preparation of the ceramic fiber-reinforced material and to its use in fire-safe panels, fire-safe fixtures and laminated structures including laminated honeycomb structures.

The ceramic fiber-reinforced material is prepared by impregnating or heat-penetrating a tow, sheet or cloth of inorganic fiber with a matrix composition comprising:

component (A), which comprises a fine powder of a metal oxide having an average particle size of 1 µm or less;
component (B), which comprises a soluble siloxane polymer having a double chain structure;
component (C), which comprises a trifunctional silane compound containing at least one ethylenically unsaturated double bond;
component (D), which comprises an organic peroxide; and
component (E), which comprises a monomer containing at least two ethylenically unsaturated double bonds and capable of undergoing radical polymerization;

and suitable solvents and additives.

The metal oxide comprising component (A) is exemplified by an oxide such as silica, alumina, titanium oxide, lithium oxide, zinc oxide, tin oxide, calcium oxide, magnesium oxide, boron trioxide, zirconia, partially stabilized zirconia, vanadium pentoxide, barium oxide, yttria, or ferrite, and by a composite oxide, such as mullite, steatite, forsterite, cordierite, aluminum titanate, barium titanate, strontium titanate, potassium titanate or zirconate titanate. These oxides may be used individually or in combinations of two or more. Among the foregoing metal oxides, it is preferred that at least one oxide be used from the group consisting of alumina, silica, titanium oxide and a composite oxide formed of these.

The metal oxide employed in the present invention has an average particle size of 1 µm or less, preferably 0.5 µm or less. The fine powder of a metal oxide of such particle size is tightly bonded with component (B) and is incorporated in the three-dimensional network structure formed predominantly by components (C), (D) and (E) of the matrix composition. The resultant material is easily fired. If the average particle size is larger than 1 µm, however, a fired prepreg with satisfactory strength cannot be obtained.

Since fine powders of metal oxides have hydroxyl groups on at least a portion of their surfaces, they react effectively to form a ceramic material. In contrast, fine powders of a metal nitride or a metal carbide do not have sufficient hydroxyl groups on their surfaces and, accordingly, firing at high temperature and high pressure is necessary to furnish a ceramic material.

The soluble siloxane polymer comprising component (B) and having a double chain structure may be either a homo-polymer or a co-polymer. Component (B) serves as the binder for the metal oxide.

In general, a ladder-type organic polymer having a double chain structure is preferred, because it has superior heat resistance and rigidity and does not undergo significant thermal contraction, relative to a linear organic polymer. However, even an organic ladder polymer thermally decomposes or contracts at temperatures higher than 500° C. Therefore, if a fired prepreg is manufactured with a ladder-type organic polymer, a multiplicity of cracks and bubbles are generated during firing.

The present inventors discovered that a siloxane homo-polymer or siloxane co-polymer having a double chain structure is the preferred binder, because it has a high second transition point (glass transition substantially converted into a ceramic composition. Soluble siloxane polymers having a double chain structure also includes soluble siloxane oligomers.

The siloxane polymer having a double chain structure is prepared from silanes exemplified by a trialkoxysilane of the formula $R'Si(OR)_3$, where R is an alkyl group such as a methyl group or an ethyl group and R' is a substituted or unsubstituted aliphatic, alicyclic, or aromatic group, such as an alkyl group, a phenyl group, a vinyl group, a cyclopentyl group, cyclohexyl group or methacryloylalkyl group.

Suitable trialkoxysilanes include methyltrimethoxysilane, methyltriethoxysilane, propyltrimethoxysilane, methyltriisopropoxysilane, methyltributoxysilane, octyltriethoxysilane, vinyltriethoxysilane, phenyltriethoxysilane and $\gamma$-methacryloxypropyltrimethoxysillane.

The soluble siloxane polymer having a double chain structure can be prepared by conventional methods, such as those disclosed in F. Brown et al., J. Polymer Sci., Part C, No. 1, p. 83 (1983), in such a way that one or more of the trialkoxysilanes are hydrolyzed with an acid catalyst and condensed. These substances are also called polysilsesquioxane and are generally expressed by Chemical Formula 1:

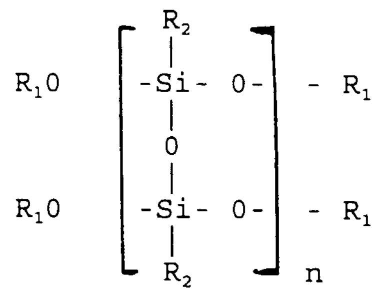

Homo-polymer

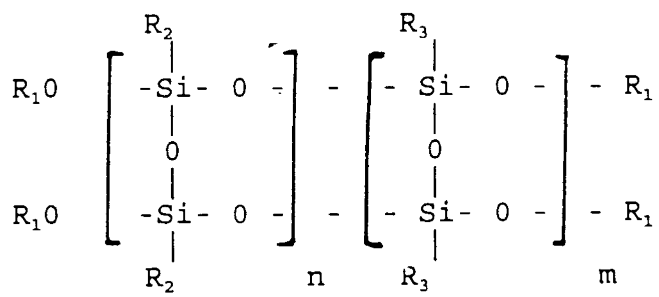

Co-polymer

Chemical Formula 1

where $R_1$ is hydrogen atom or an alkyl group, such as a methyl group or an ethyl group, and each of $R_2$ and $R_3$ is an alkyl group, such as a methyl group or an ethyl group.

Suitable examples of polysilsesquioxane include polymethyl silsesquioxane, polyphenyl silsesquioxane, polyvinyl silsesquioxane, polyphenylmethyl silsesquioxane, polyphenylpropyl silsesquioxane, polymethyl-n-hexyl silsesquioxane, and polyphenylmethacryloxypropyl silsesquioxane. Among these, polyphenyl silsesquioxane, polyphenylmethyl silsesquioxane and polyphenylethyl silsesquioxane are preferred. When a co-polymer is used, it is preferred that the molar ratio of the phenyl group to either the methyl group or the ethyl group ranges from 2/1 to 1/2, so that the thermal contraction ratio is small.

Although the molecular weight of the silsesquioxane polymer is not particularly limited, it is usually preferred that the molecular weight of the silsesquioxane polymer is 1,000 daltons or more, more preferably 1,500 daltons or more.

For example, polyphenyl silsesquioxane is soluble in various solvents and a strong and tough film can be cast from this solution. Further, it has a high glass transition point, Tg, of 300 to 400° C., thus minimizing thermal deformation during preforming and firing. Additionally, the main chain of the polymer does not break, even if heated to 900° C. The polymer is also transformed into a ceramic structure, such as amorphous silicon oxycarbide (Si-C-0), in high yield.

In contrast, if an organic polymer is employed as the binder, the polymer thermally decomposes during firing at atmospheric pressure, bonding with the metal oxide does not occur, and cracks are generated throughout the material.

The soluble siloxane polymer having a double chain structure does not significantly contract even if heated to high temperatures. Further, it is readily transformed into a ceramic structure without significant thermal contraction. Therefore, a soluble siloxane polymer having a double chain structure possesses superior characteristics when fired at atmospheric pressure in a non-fixed state.

The term 'atmospheric pressure' describes conditions in which no attempt is made to raise or lower the ambient pressure.

Among soluble siloxane polymers having a double chain structure, it is advantageous to employ one having a silanol group or an alkoxy group at one terminal of the molecule. Such a soluble siloxane polymer has an affinity for component (A), which possesses hydroxyl groups on at least a portion of its surface. Thus, they are mutually dispersed and, when heated, react with each other. When fired, they are integrated into a ceramic structure.

However, soluble siloxane polymers having a double chain structure undergo thermal contraction of approximately 10% when heated to temperatures near 1,000° C. As a result, dimensions are altered and cracks and voids generated.

The present inventors discovered that this thermal deformation can be effectively prevented by constructing a strong three-dimensional network structure in the preformed prepreg.

The three-dimensional network structure is formed by component (C), comprising a trifunctional silane compound having at least one ethylenically unsaturated double bond in the molecule; component (D), comprising an organic peroxide; and component (E), comprising a monomer having at least two ethylenically unsaturated double bonds and capable of undergoing radical polymerization.

Cross-linking systems employing a rubber or polymer, a cross-linking agent (peroxide), and a co-cross-linking agent (reactive monomer) are known. However, a cross-linking system employing the combination of component (C), a trifunctional silane compound having at least one ethylenically unsaturated double bond; component (D), an organic peroxide; and component (E), a monomer having at least two ethylenically unsaturated double bonds and capable of undergoing radical polymerization, was not known in the prior art.

In a preferred embodiment, the silane coupling agent possesses a first reactive group, for example, a methoxy group which is chemically bonded to an inorganic component, and a second reactive group, for example, a vinyl group or an amino group which is chemically bonded to an organic substance, such as a resin.

To construct a superior fiber-reinforced ceramic material, it is necessary to improve the affinity among components (A) and (B), the ceramic precursors, and component (D), the organic substance, to generate a strong network structure within the matrix and to increase the strength of the bond between the matrix substances and the inorganic fibers.

Not all silane coupling agents can achieve these ends. In the present invention, a trifunctional silane compound having at least one ethylenically unsaturated double bond is employed as component (C). Component (C) can easily bond with the terminals of the soluble siloxane polymer having a double chain structure, and with the particles of the metal oxide. This bond results from the dehydrating condensation of the hydroxyl groups during heating. Since the trifunctional silane compound also reacts easily with the surface hydroxyl groups of the inorganic fiber, the bond between the matrix composition and the inorganic fiber is greatly improved. Thus, the oxide type inorganic fiber is superior to the nitride or the carbide inorganic fiber. The ethylenically unsaturated double bonds in component (C) react with the radical catalyst,

component (D), such that they are included in the network structures.

Suitable trifunctional silane compounds having at least one ethylenically unsaturated double bond include vinyl tris(β-methoxyethoxy)silane, vinyl trimethoxysilane, vinyl triethoxysilane, γ-methacryloxypropyl trimethoxysilane and γ-methacryloxypropyl triethoxysilane. Methacryloxyalkyl trialkoxysilanes are preferred. In particular, it is preferred that γ-methacryloxypropyl trimethoxysilane or γ-methacryloxypropyl triethoxysilane be used.

To form the network structures in the preformed body, a cross-linking agent is required. In the present invention, an organic peroxide, component (D), serves as an effective cross-linking agent.

To ensure effective reaction, an organic peroxide which does not decompose under conditions prevailing prior to preforming is preferred. Particularly preferred is an organic peroxide having a threshold temperature of 110° C. for a half-life period of 10 hours. Such organic peroxides include dicumyl peroxide, t-butylcumyl peroxide, di-t-butyl peroxide, α,α-bis(t-butylperoxyisopropyl)benzene, di-t-butylperoxydeisopropyl benzene, 2,5-dimethyl-2,5-di(t-butylperoxy)hexyne-3, 1,1-bis(t-butylperoxy)-3,3,5-trimethylcyclohexane, 2,2-bis(t-butylperoxy)butane and 2,2-bis(t-butylperoxy)octane.

The matrix compositions additionally contains component (E), a monomer having at least two, preferably three, ethylenically unsaturated double bonds and capable of undergoing radical polymerization. Component (E) functions as a co-cross-linking agent to strengthen the three-dimensional network structure. The matrix composition containing component (E) is transformed into a network structure which contains particles of the metal oxide, which cannot easily be deformed with heat, and which has sufficient chain length.

Suitable examples of component (E) include ethylene glycol dimethacrylate, ethylene glycol diacrylate, triethylene glycol dimethacrylate, triethylene glycol diacrylate, ethylene glycol diitaconate, tetramethylene glycol diitaconate, ethylene glycol dicrotonate, ethylene glycol dimaleate, trimethylolpropane trimethacrylate, trimethylolpropane triacrylate, trimethylolethane trimethacrylate, trimethylolethane triacrylate, pentaerythritol trimethacrylate, pentaerythritol triacrylate, pentaerythritol tetramethacrylate, and pentaerythritol tetraacrylate. Among the above substances, it is preferred that the dimethacrylate, diacrylate, trimethacrylate, and/or triacrylate of a polyhydoxy alcohol, for example, trimethylolpropane trimethacrylate or trimethylolpropane triacrylate, be used.

Each component used to construct the matrix is dissolved or dispersed in a suitable organic solvent. The type and quantity of solvent is chosen depending upon the identity of each component and the ratio of the mixture. The preferred solvent is at least one member selected from the group consisting of alcohols, aromatic hydrocarbons, alkanes, ketones, nitryls, esters and glycolesters. Although it is preferred that the solvent be removed completely before preforming and that, accordingly, a low-boiling solvent such as acetone be employed, the solvent is not so limited. The solvent may be used individually or two or more solvents may be used in combination.

In the present invention, it is preferred that components (A) through (E) be maximally uniformly dissolved or dispersed in the solvent to produce a fine structure in the ceramic material after firing. To achieve this, one method comprises dissolving components (B) through (E) while stirring, adding component (A) to the resultant solution, and stirring continuously until the components are dispersed uniformly. However, another method, in which components (A) through component (E) are simultaneously added to the solvent while stirring sufficiently, results in a satisfactory fiber-reinforced ceramic material. A dispersion stabilizer, such as a conventional surface active agent, may be added in small quantities. Further, known additives may be added as long as the characteristics of the matrix composition can be maintained.

The ratio of components in the matrix composition is determined depending upon the identity of the components and the desired performance of the preformed or fired prepreg. Preferably, the matrix composition has the following ratio of the components:

the quantity of component (A) is 350 to 750 parts by weight, more preferably 450 to 650 parts by weight,

that of component (B) is 80 to 170 parts by weight, more preferably 100 to 150 parts by weight,

that of component (C) is 25 to 125 parts by weight, more preferably 50 to 100 parts by weight,

that of component (D) is 1 to 4 parts by weight, more preferably 1.5 to 3 parts by weight, and

that of component (E) is 25 to 125 parts by weight, more preferably 50 to 100 parts by weight.

The tack characteristics of the prepreg are adjusted by varying the quantity of components (D) and (E) relative to the quantities of the other components.

The matrix composition may be used either while containing solvent or after the composition has been formed into a shaped member from which solvent has been removed. The prepreg can be manufactured by impregnating or heat penetrating a tow, a sheet-shape member or other product of an inorganic fiber with a solution or of the matrix composition. Further, the prepreg can be manufactured from cut fiber, whose

length is greater than 1 cm, upon impregnation with the matrix composition. A specified shape of continuous fiber ceramic material can be formed from a sheet of the prepreg or from the impregnated cut fiber.

The term "tow" refers to a large number of continuous filaments collected in rope-like form without a definite twist.

It is preferred that the inorganic fiber possess significant strength, if heated to at least 500° C., preferably 1,000° C., more preferably 1,200° C. in an inert atmosphere or an oxide atmosphere, such as air. Fibers that meet such conditions are exemplified by inorganic fibers of a nitride, inorganic fibers of a carbide, inorganic fibers of an oxide, and carbon fibers. These fibers have sufficient heat resistance and impact strength.

Preferred inorganic fibers include glass fiber, alumina fiber, silica fiber, Tyranno fiber (Si-Ti-C-0) and an oxide-type inorganic fiber consisting of various fibers, predominantly alumina and/or silica. Although the strength of glass fiber diminishes at high temperatures, it is stronger than the other oxide type inorganic fibers at room temperature. Thus, it has sufficient strength at temperatures up to 600° C.

It is preferred that the inorganic fiber be used only after any sizing agent adhering to it has been removed. The inorganic fibers preferably have a length greater than 1 cm.

The fiber-reinforced ceramic material is characterized in that its fracture is controlled by the frictional force of the interface between the fiber and the matrix, as well as by the strength of the fiber that bears the load. Therefore, it is particularly important that the bond at the interface between the fiber and the matrix is not excessively strong, but rather is controlled such that the fiber can be drawn (pull-out), in contrast to fiber-reinforced plastic or fiber-reinforced metal (see Niihara, "Nikkei Mechanicalil", p.114). The fiber and the matrix should be weakly bonded to each other in a fired prepreg, but the fiber and the matrix composition require sufficient bonding to each other prior to firing.

As an agent for coating the surface of a fiber employed in such an interface, carbon and boron nitride are known. Carbon oxidizes at about 450° C. and boron nitride oxidizes at about 900° C. in air and, thus, a weak interface is created at these temperatures between the fiber and the matrix. The carbon or boron nitride coating is applied to the surface of the inorganic fibers to improve the mechanical strength of the fired prepreg. The inorganic fiber can be used as paralleled tow, a knitted product, or a fabric shape.

The prepreg can be manufactured by either a solvent method (also known as a "wet method") or a hot melt method (also known as a "dry method"), both of which have been used to manufacture prepregs of epoxy resins.

In the solvent method, a tow or mass of inorganic fibers is immersed in the matrix composition solution, excess solvent is squeezed out, and hot/dry air is applied to remove solvent.

In the hot melt method, a sheet-shaped member (which includes a film-shaped member) having a predetermined weight is formed from the matrix composition solution and the sheet member is stacked on either or both sides of the tow or mass of inorganic fibers. Alternatively, the sheet-shaped member and the tow/mass of inorganic fibers are alternately stacked. The members are heated, usually to a temperature lower than 120° C., to impregnate the spaces between the inorganic fibers and to form a prepreg. The resultant prepreg has tack and drape characteristics satisfactory to form a laminated structure and to maintain such tack and drape characteristics.

The prepreg is molded to a predetermined shape by conventional laminating or filament winding methods. Subsequently, the prepreg is subjected to a heating and pressurizing process, that is, the preforming process. With the present fiber-reinforced ceramic material, neither a second nor a third preforming is required. However, additional preforming and post-preforming may be performed according to circumstance.

Preferred conditions for the preforming process are as follows: heating temperatures of 120 to 250° C. and pressures of 2 to 10 $kg/cm^2$ applied over a period of 10 to 60 minutes. The preforming process is performed in such a way that it is subjected to a vacuum bag and utilizes either an autoclave or a hot press. The autoclave method is commercially advantageous because it permits the manufacture of large, complex shapes.

The resultant preformed prepreg is free from thermal contraction and surface cracks and evidences no weight reduction. Specifically, the preformed body has a bending strength of about 25 to 500 $kg/mm^2$. Furthermore, even if heated to 1,000° C. at atmospheric pressure, the preformed prepreg is still substantially free from thermal contraction.

It is believed that the preformed prepreg is substantially free from thermal contraction, because the strong three-dimensional network structure is filled with particles of the metal oxide at high densities and because there is sufficient contact between the network structure and the metal oxide. Furthermore, the inorganic fiber and the matrix bond well. Thus, peeling and separation are prevented.

The preformed prepreg is heated to 500 to 1,200° C., preferably 600 to 1,000° C., to convert it into a fired body reinforced by inorganic fiber. Although the preformed prepreg can be heated above 1,200° C., heating to an excessively high temperature diminishes the strength of the inorganic fiber. If heated to 500° C. in an initial stage of heating, particularly to a temperature range of 100° C. to 450° C. at a rate of 5° C/minute or lower, preferably 2° C/minute or lower, generation of deformations and cracks can effectively be prevented. Under such heating conditions, the preformed prepreg can be heated at atmospheric pressure and in a non-fixed state. The preformed prepreg is held at the maximum temperature for 10 minutes or longer and then cooled by conventional methods.

The atmosphere for heating may be either an acidic atmosphere, for example, air, or an inert atmosphere. However, a fired prepreg prepared in an inert atmosphere contains carbon components in the matrix and, thus, has a black color. When the fired prepreg is again heated in air, the carbon components are discharged and the color turns white. Thus, if a fired prepreg prepared in an inert atmosphere is employed in a hot oxide atmosphere, the residual carbon components are oxidized and discharged. A fired prepreg prepared in an inert atmosphere is usually stronger than one prepared in air. Accordingly, although firing in an inert atmosphere can be performed, it is not always advantageous, relative to firing in air.

An important effect of the present invention is that the firing process can be performed in air, at atmospheric pressure, and in a non-fixed state without risk of deformation. Thus, a large ceramic part having a complicated shape can be easily and conveniently manufactured.

In order to achieve the foregoing effects, all components (A) through (E) are necessary in the matrix composition. If any one of the components is missing, a superior fiber-reinforced ceramic material cannot be achieved.

Although the fired prepreg can be used as is, its performance can be further be improved by redensification. The preformed prepreg contains an organic component in an amount of 10 to 15%, varying with the ratio of the mixture of components. Although a portion of the organic component remains within the ceramic material, another portion is discharged as gas during firing. As a result, fine voids are formed in the fired body. These fine voids can be filled by immersing the fired prepreg in a solution containing components (A) through (E) or a solution containing at least component (B) and by firing again at 500° C. to 1,200° C., preferably 800 to 1,200° C. This redensification process may be performed repeatedly. In the present invention, the redensified prepreg can also be utilized as the fiber-reinforced ceramic material.

Other features of the invention will become apparent in the course of the following descriptions of exemplary embodiments which are given for illustration of the invention and are not intended to be limiting thereof.

Example 1: Preparation of Matrix Composition I

In a ball mill in which ceramic balls were enclosed, 400 parts by weight of alumina powder (average particle size - 0.4 μm), 200 parts by weight of titanium oxide powder (average particle size - 0.4 μm), 125 parts by weight of polyphenyl methyl silsesquioxane (molecular weight 2,300 daltons, phenyl/methyl ratio = 6/4), 40 parts by weight of γ-methacryloxypropyl trimethoxysilane, 50 parts by weight of trimethylolpropane trimethacrylate, 2 parts by weight of 2,5-dimethyl-2,5-di(t-butylperoxy)hexyne-3 and 250 parts by weight of acetone were injected. The ball mill was rotated for one hour and the components were mixed so that a uniformly dissolved and dispersed Matrix Composition I was obtained.

Example 2: Preparation of Matrix Composition II

In a glass cylindrical container having a stirrer, 125 parts by weight of polyphenylethyl silsesquioxane (molecular weight 1,700 daltons, phenyl/ethyl ratio = 5/5), 100 parts by weight of γ-methacryloxypropyl triethoxysilane, 30 parts by weight of dicumyl peroxide and 250 parts by weight of acetone were introduced. They were stirred until a uniform solution was achieved. Then 300 parts by weight of alumina powder (average particle size - 0.4 μm) and 200 parts by weight of silica powder (average particle size - 0.02 μm) were, while stirring, added to the solution, and subjected to ultrasonic vibration to sufficiently disperse the components, so that Matrix Composition II was prepared.

Example 3: Preparation of Matrix Composition III

The matrix composition prepared in Example I was slowly stirred so that the acetone in the matrix composition was evaporated and the viscosity of the solution reached 300 poise. As a result, a thick Matrix Composition III, capable of forming a film, was obtained.

Example 4: Prepreg

A fabric (Altex Cloth, SV-800-8H, manufactured by Sumitomo Kagaku Kogyo Kabushiki Kaisha) of alumina fiber (alumina 85 wt% and silica 15 wt%) was immersed in Matrix Composition I of Example 1. Then a squeezing roll was used to remove excess solution. The material was introduced into a medium-temperature circulating drier set to 80° C. for 5 minutes to evaporate acetone, so that a prepreg reinforced with inorganic fiber and containing the matrix composition in an amount of 60 wt% was prepared. The tack and drape characteristics and the period of time for which such tack and drape characteristics are maintained were evaluated by methods similar to that employed to evaluate conventional epoxy prepregs. The results are shown in Table 1, where superior results were obtained.

Table 1

| Characteristic | Method of Evaluation | Result |
|---|---|---|
| Tack Characteristics | A prepreg 250 long and 50 mm wide is wound around an aluminum round rod having a diameter of 50 mm to detect whether it separates after a predetermined time passed. If no breakage occurs after 4 hours, the sample passes the test. | Passed |
| Drape Characteristics | A prepreg 75 mm long and 50 mm wide is tightly wound around a stainless steel round rod having a diameter of 3 mm. If no damage to the fiber is found, the sample passes the test. | Passed |
| Out-time Characteristics | A sample is allowed to stand at room temperature for three weeks and the tack and drape characteristics are then evaluated. If the sample has satisfactory tack and drape characteristics, the sample passes the test. | Passed |

Example 5: Prepreg II

From Matrix Composition III of Example 3, a film having a thickness of 0.15 mm was constructed with a film coater. The film was applied to the two sides of the alumina fiber fabric of Example 4 and the fabric was treated with a hot roll at 120° C. to impregnate the fabric, such that a prepreg containing 50 wt% of the matrix composition was produced. The prepreg was confirmed to have tack characteristics, drape characteristics, and out-time characteristics which passed evaluation.

Example 6: Prepreg III

A tow (Altex SV-IO-IK manufactured by Sumitomo Kagaku Kogyo Kabushiki Kaisha) made of previously degreased alumina fiber (85 wt% of alumina and 15 wt% of silica) was immersed in Matrix Composition I of Example 1 so that the tow was impregnated. It was squeezed with a nozzle, and the tow was wound at a pitch of 1.5 mm around a drum having separation paper wound thereto and a diameter of 30 cm by a filament winder. Then, the tow was cut, removed from the drum, and placed in a medium-temperature circulating drier set to 80° C. for 5 minutes to remove acetone. Thus, a prepreg containing the matrix composition at 50 wt% was manufactured. The prepreg had tack characteristics, drape characteristics, and out-time characteristics which passed evaluation.

Example 7: Preformed Prepreg I

A sample formed by stacking the prepregs of Example 6, in which sample the fibers in the layers are arranged at an angle of 0°, was subjected to vacuum, placed in an autoclave, and heated to 220° C. at a rate of 2.5° C/minute. The maximum temperature was maintained for 30 minutes and then lowered at a rate of 4.5° C/minute so that a plate of preformed prepreg of thickness of 3 mm was produced. A test piece having a width of 4 mm and a length of 38 mm was obtained by cutting from the preformed prepreg. The test piece was subjected to a bending test in accordance with JIS R 1601, in which the bending strength measured 57.7 kg/mm$^2$. The measured value was the mean value of five samples.

Example 8: Preformed Prepreg II

The prepreg of Example 4 was stacked in four layers, with the fibers in the layers arranged at angles of O° and 90°, and treated with a hot press at 200° C. for 15 minutes at a pressure of 3.5 kg/cm$^2$. The resultant preformed prepreg had excellent mechanical strength and was free from contraction and surface cracks. Weight reduction measured 0.7%. The bending strength of the preformed prepreg was tested as in Example 7 and measured 28.0 kg/mm$^2$.

Example 9: Preformed Prepreg III

The prepreg of Example 5 was stacked in four layers, with the fibers in the layers arranged at angles of O° and 90°, and treated with a hot press at 150° C. for 15 minutes at a pressure of 3.5 kg/cm$^2$. The resultant preformed prepreg had excellent mechanical strength and was free from contraction and surface cracks. Weight reduction measured 0.6%. The bending strength of the preformed body of the prepreg was tested as in Example 7 and measured 32.3 kg/mm$^2$.

Example 10: Fired Prepreg I

The preformed prepreg of Example 7 was heated in air at atmospheric pressure to 500° C. at a rate of 1° C/minute. Then, it was heated to 1,000° C. at a rate of 2° C/minute, and the maximum temperature was held for one hour to fire. As a result, a ceramic laminated plate (a fired prepreg) reinforced with alumina fiber was produced. No substantial dimensional change between the preformed prepreg and the fired prepreg was observed. The weight was reduced by 7.3%, relative to the prepreg prior to firing.

High Temperature Strength Test

The laminated plate of Example 10 was subjected to a high temperature bending test at 1,000° C. The results are shown in Table 2. The bending test was performed in accordance with JIS R 1604. As shown in Table 2, strength increased with increasing temperature. It is believed that the increased temperature diminishes the bond between the fiber and the matrix, and, thus, pull-out is enhanced and/or the ductility of the matrix is increased.

Table 2

| Test Temperature | Room Temperature | 800° C. | 1,000° C. |
|---|---|---|---|
| Bending Strength (kg/mm$^2$) | 28.3 | 31.6 | 33.2 |

Heat Cycle Test

The bending strength of the laminated plate, subjected to heat cycles between room temperature and 1,000° C., performed 5, 10, 15 and 20 times was measured. The results are shown in Table 3, which demonstrates that no deterioration in strength due to multiple heat cycles was observed.

Table 3

| Number of Cycles | 0 | 5 | 10 | 15 | 20 |
|---|---|---|---|---|---|
| Bending Strength (kg/mm$^2$) | 28.3 | 27.5 | 27.2 | 27.5 | 27.2 |

Example 11: Fired Prepreg II

The preformed prepreg of Example 9 was heated in air at atmospheric pressure to 800° C. at a rate of 1.5° C/minute, and the maximum temperature was maintained for one hour for firing. As a result, a ceramic laminated plate (a fired prepreg) reinforced with alumina fiber was manufactured. The dimensional

contraction ratio between the preformed prepreg and the fired prepreg was 0.03% in the length direction and 0.8% in the width direction.

The laminated plate was subjected to the high temperature strength test and the heat cycle test described in for Example 10. The results are shown in Tables 4 and 5.

Table 4

| Test Temperature | Room Temperature | 800° C. | 1,000° C. |
|---|---|---|---|
| Bending Strength (kg/$mm^2$) | 14.0 | 15.8 | 17.1 |

Table 5

| Number of Cycles | 0 | 5 | 10 | 15 | 20 |
|---|---|---|---|---|---|
| Bending Strength (kg/$mm^2$) | 14.0 | 13.2 | 13.7 | 15.1 | 14.7 |

Example 12: Redensification Process I

125 parts by weight of polyphenylmethyl silsesquioxane (molecular weight 1,700 daltons, phenyl/methyl ratio = 5/5), 100 parts by weight of $\gamma$--methacryloxypropyl trimethoxysilane, 1.3 parts by weight of dicumyl peroxide and 250 parts by weight of acetone were placed in a glass cylindrical container containing a stirrer and stirred until a uniform solution was achieved.

The ceramic laminated plate reinforced with alumina fiber of Example 11 was immersed in this solution. The pressure was lowered until no bubbles were observed and the lowered pressure was maintained. Then, the lowered pressure was released and the laminated plate was removed. Acetone was completely removed in a drier set to 80° C. The impregnated laminated plate was placed in an electric furnace and heated at a rate of 1° C/minute in air to 800° C. The maximum temperature was then held for one hour. A redensified ceramic laminated plate was thus manufactured and constituted a first impregnation sample. Similar impregnation, drying and firing processes were repeated two additional times, producing a second impregnation sample and a third impregnation sample. The results of bending tests to which each sample was subjected are shown in Table 8, which indicates that the bending strength improved as the number of impregnations increased.

Table 6

| Number of Impregnations | Pre-impregnation | One | Two | Three |
|---|---|---|---|---|
| Bending Strength (kg/$mm^2$) | 14.0 | 20.9 | 23.9 | 24.8 |

Example 13: Redensification Process II

The ceramic laminated plate reinforced with alumina fiber of Example 11 was introduced into a vacuum chamber, and the chamber was evacuated. Then, methylphenylvinyl hydrogen polysiloxane (H62C, manufactured by Wacker-Chemie GMBH) was introduced and the mixture allowed to stand for one night. The system was then returned to atmospheric pressure and the laminated plate was removed. The impregnated laminated plate was placed in an electric furnace to raise the temperature to 800° C. at a rate of 1.5° C/minute and the maximum temperature was held for one hour. The functional characteristics of the laminated plate before and after the redensification process are shown in Example 17 and Table 11.

Example 14: Redensification Process III

The ceramic laminated plate reinforced with alumina fiber of Example 10 was introduced into a vacuum chamber to manufacture a redensified ceramic laminated plate by a method similar to that of Example 13. A

first sample was subjected to a single impregnation and a second sample was subjected to two impregnations. The results of the bending test of each sample are shown in Table 7.

Table 7

| Number of Impregnations | Pre-Impregnation | One | Two |
|---|---|---|---|
| Bending Strength ($kg/mm^2$) | 28.3 | 35.9 | 38.1 |

Example 15: Glass Fiber

In a ball mill in which ceramic balls were enclosed, 400 parts by weight of alumina powder (average particle size - 0.4 $\mu$m), 200 parts by weight of titanium oxide powder (average particle size - 0.4 $\mu$m), 125 parts by weight of polyphenyl silsesquioxane (molecular weight 1,700 daltons), 50 parts by weight of $\gamma$-methacryloxypropyl trimethoxysilane, 50 parts by weight of trimethylolpropane triacrylate, 2 parts by weight of dicumyl peroxide and 250 parts by weight of methanol were introduced. The ball mill was rotated for one hour and the components were mixed so that a matrix solution, in which the materials were uniformly dissolved and dispersed, was obtained.

A glass fiber fabric (6781HT-38 manufactured by Hexel) was immersed in the matrix solution, and then a squeezing roll was used to remove excess matrix solution. The fabric was introduced into a medium temperature drier at 80° C. to produce a prepreg containing 65 wt% of the matrix composition. The prepreg was found to have satisfactory tack characteristics, drape characteristics, and out-time characteristics.

A structure formed by laminating the prepregs, such that the fibers in the layers are arranged at angles of O° and 90°, was subjected to vacuum and the temperature was raised to 150° at a rate of 2.5° C/minute at a pressure of 5 $kg/cm^2$. The maximum temperature was maintained for 15 minutes. Then, the temperature was lowered so that a plate made of a preformed prepreg of a thickness of 3 mm was produced.

The resultant preformed prepreg was free from contraction and surface cracks and the weight reduction measured 1.1%. The preformed prepreg was heated to 400, 500, 600 and 700° C. at a rate of 1.5° C/minute in air at atmospheric pressure, each temperature being maintained for one hour.

The ratio of the weight reduction was measured with the heat analyzing apparatus TG/DTA30 (manufactured by Seiko Denshi Kogyo Kabushiki Kaisha in Japan) in an air flow and at a rate of 1.5° C/minute. In this example, the weight reduction test was performed at temperatures of 400, 500, 600 and 800° C. The weight reduction ratio and the bending strength of the fired laminated plate (the fired prepreg) are shown in Table 8. The weight reduction ratio was expressed relative to that of the preformed laminated plate.

Table 8

| Temperature (° C.) | Weight Reduction Ratio (%) | Bending Strength ($kg/mm^2$) | Color of Samples After Firing |
|---|---|---|---|
| 400 | 3.7 | 13.7 | Light Brown |
| 500 | 6.3 | 12.8 | Light Brown (lighter than that at 400° C.) |
| 600 | 7.2 | 10.2 | White |
| 700 | - | 10.4 | White |
| 800 | 7.3 | - | White |

Although the weight reduction ratio increases with temperature, this ratio reaches a constant value at 600° C. The color of each sample after firing was stable after the process at 500° C. for one hour had been completed. However, it turned white when the temperature was raised to 600° C. or higher.

These results indicate that the organic component and its decomposition products are present when the firing temperature is 500° C. or lower, but that they are completely volatized and the product transformed

into a ceramic material when the temperature reaches 600° C. or higher. The bending strength of the product fired at 600° C. or higher is weaker than that product fired at 500° C. or lower. It is believed that the discharge of the organic component causes defects in the structure. The discharge of the organic component and the transformation of the pre-ceramic components into a ceramic composition can be satisfactorily performed in 10 minutes if the heat treatment is carried out at 800° C. This means that firing must be performed at 500° C. or higher, even if heat treatment is performed for a longer time at lower temperatures.

Although glass fibers conventionally demonstrate significant strength deterioration with increasing temperature relative to a ceramic fiber, such as alumina fiber, the strength of glass fibers at room temperature is considerably superior to that of the ceramic fiber. Glass fibers have significant strength even at temperatures of 800° C. For example, S-glass fibers manufactured by Owens Corning Fiberglass Corp. and T-glass fibers manufactured by Nitto Boseki Kabushiki Kaisha, have a tensile strength of about 200 $kg/mm^2$. Thus, low-cost glass fibers can be used, even though its heat resistance is inferior to that of ceramic fiber.

Example 16: Influence of The Firing Atmosphere

The prepregs of Example 4 were laminated in four layers, hot pressed as in Example 9 to produce a preformed laminated plate of size 160 mm X 160 mm and a thickness of 2 mm. The plate was divided into two sections. One section was heated to 800° C. at a rate of 1° C/minute and the maximum temperature was maintained for one hour. The second section was fired in nitrogen under the same conditions. The two samples were subjected to the redensification process at atmospheric pressure of Example 13. The results of the weight change (the weight of the preformed body is assumed to be 100) from firing and redensification and the results of bending tests (performed as in Example 7) on the redensified body are shown in Table 9.

Table 9

| Firing Atmosphere | Air | Nitrogen |
|---|---|---|
| Color of Fired Body | White | Black |
| Weight Change | | |
| After Firing | 93.8 | 95.5 |
| After Redensification | 96.6 | 98.1 |
| Redensified Body | | |
| Bending Strength ($kg/mm^2$) | 21.5 | 18.3 |
| Bending Elastic Modulus ($kg/mm^2$) | 6740 | 8090 |

It is believed that significant weight change does not occur during firing in nitrogen as compared with air, because the organic component in the matrix component is carbonized. This was confirmed by the observation that further firing, at 800° C. for one hour, of the black body fired in nitrogen turned the color to white, the same color as that of the air-fired product.

The nitrogen-fired body possessed improved strength and a higher elastic modulus relative to the air-fired body. This suggests that air-firing results in greater ductility.

Example 17: Comparative Examples 1 to 3: Influence of Matrix Composition I

Variations in the matrix composition were performed as in Example 1 by employing the matrix components and mixture ratios shown in Table 10. The prepreg and the preformed laminated body (the preformed prepreg) were manufactured by the methods at Examples 4 and 8. In Example 17 and Comparative Example 1, each of the preformed laminated plates was heated to 800° C. at a rate of 1.5° C/minute and the maximum temperature was maintained for one hour. Thus, a fired laminated plate was manufactured. The redensification process was performed as in Example 13.

Table 10

| Component | Name of Component | | Example 17 |
|---|---|---|---|
| (A) | alumina powder | | 400 |
| | powder of titanium oxide | | 200 |
| (B) | polyphenylmethyl silsesquioxane | | 125 |
| (C) | γ-methacryloxypropyl trimethoxy silane | | 40 |
| (D) | 2,5-dimethyl-2,5-di(t-butylperoxy)-hexylene-3 | | 2 |
| (E) | trimethylolpropane triacrylate | | 25 |
| | acetone | | 250 |
| Component | Comparative Example 1 | Comparative Example 2 | Comparative Example 3 |
| (A) | 400 | 400 | 0 |
| | 200 | 200 | 0 |
| (B) | 125 | 125 | 180 |
| (C) | 40 | 0 | 0 |
| (D) | 2 | 0 | 0 |
| (E) | 0 | 0 | 0 |
| (Solvent) | 200 | 200 | 200 |
| (numbers represent parts by weight) | | | |

Employing similar methods and conditions, the following results were obtained:

Comparative Example 3:

The prepreg impregnated only with component (B) had no significant tack characteristics and was difficult to cut relative to other examples, because the fiber was twisted. When the prepregs were laminated and preformed with a hot press, the elevated temperature caused the matrix to flow excessively. Consequently, overflow from the mold occurred and manufacture of a laminated plate was impossible. The subsequent firing process could not be performed.

Comparative Example 2:

The prepreg impregnated with components (A) and (B) also possessed unsatisfactory tack characteristics. However, it could be cut easily. The layers of the preformed body, after lamination and hot-pressing, separated from one another. As a result, an integrated laminated plate could not be produced. The subsequent firing process could not be performed.

Comparative Example 1 and Example 17:

Comparative Example 1 possessed unsatisfactory tack characteristics and the sample could not be handled easily. However, the sample was cut easily and the preforming process performed. Thus, an integrally preformed laminated plate was obtained.

Example 17 produced superior tack characteristics, cutting characteristics, and preforming. As a result, a superior preformed laminated plate was obtained.

These two preformed laminated plates were subjected to the firing and redensification processes of Examples 11 and 13. Measurements were performed in such a way that the contraction ratio after firing, the bending strength, the bending elastic modulus and the hardness of each preformed material, fired material and redensified material were measured. The hardness was measured with a Vickers Hardness Meter AVK-CT, manufactured by Kabushiki Kaisha Akashi Seisakusho in Japan. The results are shown in Table 11.

Table 11

| Tested Factors | | Example 17 | | | Comparative Example 1 | | |
|---|---|---|---|---|---|---|---|
| | | Preformed Body | Fired Body | Redensified Body | Preformed Body | Fired Body | Redensified Body |
| Contraction Ratio after firing (%) | direction of thickness | - | 0.69 | - | - | 0.09 | - |
| | direction of length | - | 0.02 | - | - | 0.02 | - |
| Bending Strength ($kg/mm^2$) | | 32.2 | 19.4 | 27.8 | 14.9 | 12.5 | 14.0 |
| Bending Elastic Modulus ($kg/mm^2$) | | 5490 | 5640 | 6500 | 4960 | 4680 | 5410 |
| Vickers Hardness ($kg/mm^2$) | | 59.9 | 82.0 | 196.0 | 43.3 | 75.1 | 160.8 |

The post-firing contraction ratio of Example 17 is somewhat higher than that of Comparative Example 1. It is believed that this results from discharge of component (E). Since both examples resulted in low contraction ratios, dimensional changes due to firing can be substantially reduced.

One difference between Example 17 and Comparative Example 1 arises in the mechanical characteristics of the laminated plate. For the preforming, firing and redensification processes, Example 17 had superior bending strength, bending elastic modulus and Vickers hardness relative to Comparative Example

1. This demonstrates that the superior mechanical characteristics of the preformed body of Example 17 are maintained after firing and redensification. In particular, the structure of Example 17 was strengthened by the redensification process as compared with Comparative Example 1. It is believed that the fired material of Example 17 has a higher aperture ratio than closed ratio, while Comparative Example 1 has a higher closed ratio than aperture ratio.

These results demonstrate that a preformed body having a complicated shape can be produced, because the present invention permits the manufacture of a prepreg having superior tack characteristics. Since it is strong and hard, the prepreg is free from deformation, even if subjected to firing in a non-fixed state. The prepreg has an effective shape-maintaining property, not undergoing considerable dimensional change or deformation. As a result, there is no significant generation of cracks, resulting from contraction of the matrix during firing. Thus, long-fiber-reinforced ceramic materials having superior mechanical characteristics can be produced. Component (E) results in superior mechanical characteristics in the laminated body at each stage and increases the strength upon redensification. Additionally, such a prepreg possesses superior tack and drape characteristics, thus improving molding behavior.

Comparative Example 4: Influence of Matrix Composition II

A prepreg, a preformed prepreg and a fired prepreg were manufactured as in Example 17. However, mullite was employed in place of component (A) of Example 17. The amount of mullite ($3A1_2O_3 \cdot 2SiO_2$) equalled the total quantity of alumina and titanium oxide in Example 17. The mullite powder had an average particle size of 1.2 $\mu$m. The remaining components and mixture ratios were the same as those of Example 17.

In Example 17, hot-pressing the laminated prepreg resulted in a thickness of 1.8 mm. When component (A) of Example 17 was replaced with mullite, no matrix flow was observed under these conditions. Further, the resultant thickness after pressing was 3.1 mm. When the test pieces were obtained from the fired laminated plate by cutting, the major portion was broken. Those test pieces obtained had poor bending strength, 1.1 kg/mm$^2$, and a bending elastic modulus of 1370 kg/mm$^2$. This demonstrates that metal oxide particles having a particle size of 1 $\mu$m or less, preferably 0.5 $\mu$m or less, must be used.

Example 18: Influence of Matrix Composition III

A prepreg, a preformed prepreg, a fired prepreg and a redensified prepreg were manufactured as in Example 17. However, ethylene glycol dimethyl methacrylate was employed in place of component (E) of Example 17. The bending strength of the redensified laminated plate was 20.2 kg/mm$^2$ and the bending elastic modulus was 5980 kg/mm$^2$. However, its tack characteristic were inferior to that of Example 17.

Comparative Examples 5 and 8: Comparison of Polymer Binder

In the conventional slurry method, a polymer-type binder is used. Accordingly, polyurethane was employed as the polymer, adding components (D) and (E) (Comparative Example 5). Another example was constructed using component (C) in place of the polymer and adding components (D) and (E) (Comparative Example 8).

The matrix composition was prepared as in Example 1. Table 12 provides the mixture ratio of the matrix composition.

Table 12

| Component | Name of Component | Comparative Example 5 | Comparative Example 6 |
|---|---|---|---|
| (A) | alumina powder | 600 | 600 |
| | polyurethane | 30 | --- |
| (C) | γ-methacryloxypropyl trimethoxysilane | --- | 30 |
| (D) | dicumyl peroxide | 2 | 2 |
| (E) | trimethylolpropane triacrylate | 40 | 40 |
| (Solvent) | acetone | 400 | 250 |

(numbers represent parts by weight)

The matrix solution and fabric of alumina fiber of Example 4 were used to manufacture a prepreg. The content of the matrix (the solid component) was 60 wt%. The prepregs were stacked to form four layers, arranged with the fibers at angles of O° and 90°, molded, and preformed with a hot press at 150° C. for 15 minutes at a pressure of 3.5 kg/cm$^2$. Then, the laminate was heated to 800° C. at a rate of 1.5° C/minute at atmospheric pressure and the maximum temperature was maintained for one hour.

In Comparative Example 5, no flow of the matrix occurred and satisfactory tack characteristics permitted molding. However, upon firing, the material did not have satisfactory rigidity, although the layers did not separate. Thus, only a soft, flexible product was obtained. In addition, the matrix was deformed and fallen. One possible explanation is that the organic binder decomposed upon heating and the bond between the ceramic particles was lost. If an organic binder is used, atmospheric pressure and low temperature firing is

not suitable. In such a case, high temperature and high pressure firing is required, as employed in the conventional slurry method.

Comparative Example 6 also did not produce a flow of the matrix and, consequently, molding and preforming could be performed. However, firing resulted in separation of the four layers, demonstrating unsatisfactory bonding.

Thus, these results show that the objects of the present invention can be achieved only by using the combination of components (A) to (E).

As demonstrated by the above examples, the present invention produces a practical fiber-reinforced ceramic material. Indeed, the present invention provides the following technological advantageous:

(1) the prepreg has superior molding properties, enabling the manufacture of a product having a complicated shape;

(2) preforming can be performed by a single step of heating at low temperature, permitting easy manufacture in a short time;

(3) firing can be performed at atmospheric pressure and in a non-fixed state in air without deformation and dimensional change; and

(4) the resultant fired body has superior physical characteristics, for example, superior strength, heat cycle resistance, and absence of separation of the layers.

As stated above, the present ceramic material is produced from prepregs obtained by impregnating or heat penetrating an inorganic tow or an inorganic product with a specific matrix composition. Such a prepreg has the tack, drape and long out-time characteristics exhibited by epoxy resin composite prepregs and permits the manufacture of complex structures. Heating and pressure molding results in strong cross-linking of the matrix composition and transforms it into a fiber-reinforced material with superior adhesion between fiber and matrix. This cured material has much greater temperature resistance than conventional fiber-reinforced epoxy materials. By firing this cured material in air at atmospheric pressure, a fiber-reinforced ceramic material is obtained. During this process, there is no significant shrinkage or change in configuration.

This fired material can be further strengthened by redensification, using an impregnating solution containing at least one component of the matrix composition and reheating, thus filling voids produced during the first firing.

Various shapes of fiber-reinforced ceramic material can be easily made. Products constructed of this fiber-reinforced ceramic material can be employed in heat-resistant structures, such as the heat seal components of aircraft and spacecraft, vanes of turbines, space equipment, components of heaters and burners, molding tools, cutting tools, high temperature furnace materials (such as walls and cladding for reactor tubes), and furnace vessels.

The term "fire-safe" describes a material which resists fire and flame, which does not generate toxic gas upon exposure to heat or flame, and which acts as a barrier to smoke and gas.

The ceramic fiber-reenforced material of the present invention is preferably employed as a fire-safe panel or a fire-safe fixture. The term "panel" describes a flat or curvilinear piece of construction material made to form part of a surface. Preferred examples of panels include a structural member, a surface, cladding, a floor, a bulkhead, panelling, a firewall, an interior wall, a ceiling, a door and a dividing wall. The term "fixture" describes an object which is fixed or attached as a permanent appendage or a structural part. Preferred examples of fixtures include a seat, a chair, an instrument panel, a control panel, a table, a desk and a shelf.

The fire-safe panels and fire-safe fixtures can be employed either in a vehicle or in a building. Suitable examples of vehicles include an aircraft, a spacecraft, an automobile, a bus, a train, a ship, a boat, a tank, an armored car, and a personnel carrier. Preferred examples of buildings include a home, a factory, a plant, and an oil rig.

For example, in Figure 1, 30 represents the fuselage of an airplane, 34 represents the food storage compartment, 36 represents the nose of an airplane, 38 represents the tail of an airplane, 40 represents the fuselage storage compartments, 46 represents the forward storage compartment, 48 represents the rear storage compartment, 48 represents the crew cabin. All of the floors, walls, ceilings, dividing walls, and interior walls can be constructed of the fire-safe panels and the laminated honeycomb structure of the present invention.

Further, in Figure 2, 8 represents the outer shell of the passenger compartment of an airplane, 9 represents the seats within the passenger compartment, 10 represents a shelf within the passenger compartment, 11 represents the overhead storage space within the passenger compartment, 12 represents an endwall within the passenger compartment, and 13 represents a dividing wall within the passenger compartment. All of these components can be constructed of the fire-safe panels and the laminated

honeycomb structure of the present invention.

In Figure 3, S1 and S2 represent two seats in an airplane. In this figure, 14 represents the leg support, 15 represents the arm support, 16 represents the sides of the seats, 17 represents the back support of the seats, 18 represents the tray support of the seats, 19 represents the ashtrays, 20 represents the portion joining the two seats, 21 represents the base of the tray support, and 22 represents the kickplate of the tray support. All of these components can be constructed of the fire-safe panels, fire-safe fixtures, and the laminated honeycomb structure of the present invention.

Figure 4 provides a detail of a portion of a wall in an airplane.

Figure 5 provides a cross-section of the wall portion of Figure 4 along line A. In this cross-section, a layer of a glass fiber textile/phenol resin composite is laminated onto a honeycomb material. To at least one layer of the honeycomb laminate is adhered a fiber-reinforced ceramic material. On the surface of the fiber-reinforced ceramic material opposite to the honeycomb laminate is adhered a printed film, to which printed film is attached a surface attachment film.

Figure 6 provides a detail of a portion of a shelf in an airplane.

Figure 7 provides a cross-section of the shelf of Figure 6 along line A. In this cross-section, a layer of a glass fiber textile/phenol resin composite is laminated onto a honeycomb material. To at least one layer of the honeycomb laminate is adhered a fiber-reinforced ceramic material. On the surface of the fiber-reinforced ceramic material opposite to the honeycomb laminate is adhered a surface protection layer.

Figure 8 provides a cross-section of an automobile, in which 23 represents the roof and ceiling of an automobile, 24 represents the visor of an automobile, 25 represents the side of an automobile, 26 represents a seat of an automobile, and 27 represents the floor of an automobile. All of these components can be constructed of the fire-safe panels, fire-safe fixtures, and the laminated honeycomb structure of the present invention.

Figure 9 provides a partial cross-section of a building, in which 28 represents the roof, 29 represents a beam, 30 represents a joist, 31 represents a floor, 32 represents a wall, and 33 represents a ceiling. All of these components can be constructed of the fire-safe panels, fire-safe fixtures, and the laminated honeycomb structure of the present invention.

Figure 10 provides a perspective of the exterior of a room, in which 34 represents a ceiling panel, 35 represents a joint between adjacent ceiling panels, 36 represents a wall panel, 37 represents joints between adjacent wall panels, 38 represents a floor panel, 39 represents a floor beam, 40 represents a subfloor panel, 41 represents a door, and 42 represents a corner joint. All of these components can be constructed of the fire-safe panels, fire-safe fixtures, and the laminated honeycomb structure of the present invention.

Figure 11 provides a cross-section of a laminated honeycomb structure in which a fiber-reinforced ceramic material is adhered to two opposing surfaces of a honeycomb material.

The prepreg is flexible and adhesive. Thus, it can conform to a variety of complicated shapes. A panel comprising metal honeycomb and fiber-reinforced ceramic material is preferred embodiment. If the panel is used as a wall material in the body or partition of a structure, preferred additional elements include glazing, paint patterns, an adhered protection film and printed wallpaper adhered to the surface with as small a quantity of adhesive agent as possible. To adhere the prepreg to another material after molding and firing, it is also preferred to use a heatproof inorganic adhesive agent.

The terms 'honeycomb' and 'honeycombed' refer to a material which is designed to be lightweight yet strong through the use of a cellular structure.

If it is necessary to use an organic resin, it is preferred to use a phenol resin, especially a vinyl modified phenol resin, rather than an epoxy resin. If there is no adequate inorganic adhesive agent, an organic adhesive agent can be used. The material to be used with the fiber-reinforced ceramic material is preferably a glass fiber- or carbon fiber-reinforced epoxy (for example, polyamide or phenol) resin rather than an aluminum honeycomb.

The vehicles in the present invention have inner walls and floors made of the fiber-reinforced ceramic material. The inner walls are deredensified as walls, side panels, ceilings, bulkheads and floors which form the space for passengers or crew. The floors are deredensified as floors which form a space or compartment for passengers. Those inner walls and floors can include molded fiber-reinforced ceramic materials such as plates, curved plates, and tubes or the like. These materials can be attached to the surfaces of walls, floors and ceilings themselves by using adhesives, moldings or fasteners. Interior materials and interior goods of the structures of the present invention can also be made of the fiber-reinforced ceramic material.

The interior materials and interior goods of the structures of the present invention include not only walls, floors, bulkheads and ceilings which surround crews and passengers, but also products within the structure, for example, surface materials of a wall, a floor, a ceiling, a baggage compartment, an instrument panel, a

chair, a desk, a window frame, a door frame, a pillar, a rib, a panel, a cable conduit and a fixed frame of various parts. Such materials constitute the overall interior structure, in which crew, passengers or occupants stay, live and work. Interior walls, floors, bulkheads, ceilings and interiors of the structures may employ the fiber-reinforced ceramic material on their surfaces.

Figure 12 shows an example of a laminated material which can be employed as an interior wall, floor, and interior goods of a structure.

As shown in Figure 12, the laminated structure consists of a fire-resistant resin sheet 43 laid up on sides of a thermal resistant resin sheet 44 and a layer of fiber-reinforced ceramic material 46 bonded on sheet 43 with adhesive 45.

Figure 14 illustrates a plan view of a ship, in which 52 represents a masthead, 53 represents a forecastle, 54 represents a deck, 55 represents a superstructure containing various partitions and rooms, and 56 represents a cargo hold with various cargo compartments.

Figure 15 illustrates side elevation showing in outline form a space craft broken away to depict a portion of the interior structure, in which 57 represents nose cone and fuselage, 58 represents a cargo compartment with various partitions, 59 represents a wing, and 60 represents a tail fin.

This fire retardant resin composite comprises, for example, inorganic fiber and thermal resistant resin. Inorganic fibers suitable for the fire retardant resin composites include glass fiber, alumina fiber, silica fiber, Tyranno fiber or oxides of inorganic fibers of alumina and/or silica. Suitable thermal resistant resins for the fire retardant resin composites include phenol, polyphenylenesulfide, polysulfone, all-aromatic polyester, amorphous polyarylate, polyetherimide, polyetheretherketone polyamide, and epoxy resin, among others. Preferred resins are epoxies, phenolics and polyphenylenesulfide, known as engineering resins.

Fire retardant resins are thermoplastic resins containing one or more halogen atoms and preferably these include polyvinylfluoride, polyfluoroethylenepropylene copolymer and polyfluorovinylidene.

Suitable adhesive materials include conventional adhesives, such as epoxy and cyanoacrylate. Attachment can be by mechanical means, molded means, locking strips, or fasteners. The thicknesses of the thermal resistant resin composites, sheets of fire retardant resin, and fiber-reinforced ceramic materials are selected based on the design of the laminated structure.

In this layered structure, it is preferred that the surface of the fiber-reinforced ceramic material be covered with a fired glazing agent. Such a fired glazing coating renders the layered structure gas-impermeable. Thus, interior walls, flooring materials, and interior products constructed with such a coated, layered structure do not permit toxic gases, smoke, or fire to pass through the structure. A space surrounded by such a coated, layered fiber-reinforced ceramic material is a much safer environment, because gas, smoke, and fire cannot penetrate into the space.

Suitable glazing agents include, for example, perhydropolysilazane, which is commercially available as "POLYSILAZANE" and "COSMO COAT".

The laminated honeycomb structure of the present invention can be employed as interior wall material, flooring material or interior products for the structures of the present invention.

The present invention also pertains to a laminated honeycomb comprising a solid foam-filled material, as long as the material is configured such that a fiber-reinforced ceramic material is placed on either or both sides of the material.

Figure 13 shows an example of a laminated honeycomb structure. The laminated honeycomb structure places sheet 47, made of a fire retardant resin component, on the both sides of honeycomb 48. A fire-retardant resin sheet 49 is placed on sheet 47 and then the fiber-reinforced ceramic material 50 is placed upon sheet 47 with adhesive 51. Alternatively, the materials can be attached with mechanical fasteners or integrally molded.

There is no limitation on the type of honeycomb or solid laminate which can be utilized. For example, a laminated metal honeycomb structure, utilizing aluminum, aluminum alloy or stainless steel honeycomb, or a laminated non-metallic honeycomb structure, utilizing fire retardant resins or engineering resins, are all suitable.

To enhance further the fire retardant characteristics of the laminated honeycomb structure, it is preferred to use either a non-metallic or metallic honeycomb. Utilizing a ceramic or a fiber-reinforced ceramic material to form the laminated honeycomb structure is also suitable, yielding a totally fire-proof structure. By combining the honeycomb and the fiber-reinforced ceramic material, the laminated honeycomb structure of the present invention prevents the spread of fire and delays the ignition of the laminated honeycomb structure itself.

Fire retardant resin compositions can be prepared by formulating, for example, inorganic fibers and fire retardant resins. Examples of inorganic fibers which can be utilized for the fire retardant resin composition include glass fiber, alumina fiber, silica fiber, graphite, Tyranno fiber, and oxides of inorganic fibers

constructed from a combination of alumina and silica.

Examples of fire retardant thermoset and thermoplastic resins or foams utilized for fire retardant resin components include phenolic resins, polyphenylene, polysulfide, polysulphone, polyethersulphone, all-aromatic polyester, polyetherimide, amorphous polyarylate, polyetheretherketone, polyamide and epoxies.

Some examples of fire retardant resins utilized for the fire retardant resin composition are thermoplastics which contain one or more halogen atoms. Examples are polyvinylfluoride, polyfluoroethylenepropylene copolymer and polyfluorovinylidene.

Adhesives which can be used include epoxy and cyanoacrylate, which are termed structural adhesives. The thicknesses of the honeycomb, thermal resistance resin composition sheet, fire retardant resin sheet and the fiber-reinforced ceramic material are conventionally determined by design and application requirements.

It is preferred that the surface of the fiber-reinforced ceramic material be covered with a fired glazing agent or otherwise sealed. The fiber-reinforced ceramic material layer preferably is impermeable.

Laminated structures of the present invention can be used for a ceiling, an interior wall, a floor, a side wall, a bulkhead, a door and other interior structures.

Examples of the fiber-reinforced ceramic material of the present invention include:

(1) ceramic materials produced by forming, curing, and firing prepregs comprising ceramic fiber, metal oxides, organic polymer and/or monomer of organic polymer, curing agent and solvent.

(2) ceramic materials constructed from inorganic fiber and a ceramic composite matrix wherein a highly refractory silicon carboxide ($SiC_xO_y$) and a precursor (monomer or low molecular polymer) of a thermosetting polymer are mixed, formed (coating, spinning, and lay-up of the prepreg), and fired. The final matrix comprises silicon carbide and atomically dispersed carbon. An example of a suitable ceramic composite matrix is "BLACKGLAS" by Allied Signal, Inc.

Laminated structures, laminated honeycomb structures, interior wall materials, ceilings, flooring materials, seats, galleys, bulkheads and interior decorative materials, which are constructed of or covered with a layer of the fiber-reinforced ceramic materials manufactured by the above processes, possess superior heat resistance and fire retardant properties, and are key materials in protecting human lives from fire.

The fiber-reinforced ceramic material meets the fire protection requirements for aircraft material when utilized as a cover for an interior wall material, a ceiling, a flooring and interior structures in aircraft. These requirements were evaluated by the testing methods described in FAA Regulation 14 C.F.R. 25.853.

These requirements include that: (1) the material possess self-extinguishing properties, (2) the average burn length does not exceed 8 inches, (3) the average burn time after removal of fire source does not exceed 15 seconds, and (4) absence of dripping from a specimen not fired for more than 3 seconds.

Standard testing methods are prescribed as follows:

(a) Atmosphere

| | |
|---|---|
| Temperature: | 70 ± 5 F° |
| Humidity: | 50 ± 5% RH |

(b) Conditioning

Specimens must be conditioned until either moisture equilibrium is reached or for 24 hours. Each specimen must remain in the conditioning environment until subjected to the flame.

(c) Specimen Configuration

Materials must be tested either as a section cut from a fabricated part as would be installed in an airplane or as a specimen simulating a cut section. The specimen may be cut from any location in a fabricated part. However, fabricated units, such as sandwich panels, may not be separated for the test. The specimen thickness must be no thicker than the minimum thickness qualified for use in an airplane.

(d) Mounting

The specimens must be mounted in a metal frame so that the two long edges and the upper edge are held securely during the vertical test (g-1). The exposed area of the specimen must be at least 2 inches (width) by 12 inches (length), unless the actual size used in the airplane is smaller. The specimen must be mounted in a metal frame so that all four edges are held securely and the exposed area of the specimen is at least 8 inches (width) by 8 inches (length) during the forty-five degree test (g-3).

(e) Specimen number

A minimum of three specimens must be tested and results averaged.

(f) Fire source

The specimen must be exposed to a Bunsen or Tirrill burner with a nominal 3/8-inch inner diameter tube adjusted to give a flame of 1.5 inches in height. The minimum flame temperature measured by a calibrated thermocouple pyrometer in the center of the flame must be 1550° F.

(g) Tests

(g-1) Vertical Test

Each specimen must be supported vertically. The lower edge of the specimen must be 3/4-inch above the top edge of the burner. The flame must be applied to the center line of the lower edge of the specimen. The flame must be applied for 80 seconds and then removed.

(g-2) Horizontal Test

Each specimen must be supported horizontally. The specimen must be positioned so that the edge tested is centered 3/4-inch above the top of the burner. The flame must be applied for 15 seconds and then removed.

(g-3) Forty-five Degree Test

The specimen must be supported at an angle of 45° to a horizontal surface. The flame must be applied for 30 seconds with one-third contacting the material at the center of the specimen and then removed.

Example 19

The laminated structure shown in Figure 12 consists of glass fiber impregnated with phenol resin, to which is attached a polyvinyl fluoride sheet on both sides and with a fiber-reinforced ceramic material bonded by epoxy adhesive on the both outer sides. This structure was subjected to the flammability test described in FAA Regulation 14 C.F.R. 5.853. No flammability was observed in either the vertical, horizontal or forty-five degree tests.

Comparative Example 7

The flammability test was carried out on the layered structure as is shown in Figure 12 except that it did not have the fiber-reinforced ceramic material and epoxy adhesive on the outer sides. As a result, the polyvinyl fluoride sheet burned and produced smoke. The glass fiber sheet impregnated with phenol resin was carbonized on the rear side.

Example 20

The layered structure shown in Figure 13 consists of a central layer of aluminum honeycomb with a glass fiber sheet impregnated with phenol resin on both sides, to which a polyvinyl fluoride sheet is layered on both sides. The fiber-reinforced ceramic layers are attached by way of epoxy adhesive on both outer sides. This layered structure was subjected to the flammability test described in FAA Regulation 14 C.F.R.

5.853. No flammability was observed in either the vertical, horizontal, or forty-five degree tests.

Comparative Example 8

The flammability test was carried out on the layered structure of Figure 13 except that it did not have a fiber-reinforced ceramic material layer and epoxy adhesive on the outer sides. As a result, the polyvinyl fluoride sheet burned and produced smoke. The phenol resin-impregnated glass fiber layer was carbonized on the rear side.

The foregoing description of preferred embodiments of the invention has been presented for purposes of illustration and description. It is not intended to be exhaustive or to limit the invention to the precise forms disclosed, and obviously many modifications and variations are possible in light of the above teaching. The embodiments were chosen and described in order to best explain the principles of the invention and its practical application to thereby enable others skilled in the art to best utilize the invention in various embodiments and with various modifications as are suited to the particular use contemplated. It is intended that the scope of the invention be deredensified by the claims appended hereto.

Inasmuch as the present invention is subject to many variations, modifications and changes in detail, it is intended that all matter contained in the foregoing description or shown in the accompanying drawings shall be interpreted as illustrative and not in a limiting sense.

## Claims

**1.** A fire-safe means such as a fire-safe panel or a fire-safe fixture, comprising at least one member formed of a ceramic fiber-reinforced material.

**2.** The fire-safe means according to claim 1, wherein said ceramic fiber-reinforced material is prepared by firing at least one prepreg formed by impregnating an inorganic fiber with a matrix composition comprising:
component (A), comprising a powdered metal oxide having an average diameter less than 1 $\mu$m;
component (B), comprising a soluble siloxane polymer having a double chain structure;
component (C), comprising a trifunctional silane compound containing at least one ethylenically unsaturated double bond;
component (D), comprising an organic peroxide; and
component (E), comprising a monomer containing at least two ethylenically unsaturated double bonds and capable of undergoing radical polymerization.

**3.** The fire-safe means according to claim 1, wherein said ceramic fiber-reinforced material is prepared by laminating at least one prepreg formed by impregnating an inorganic fiber with a matrix composition comprising:
component (A), comprising a powdered metal oxide having an average diameter less than 1 $\mu$m;
component (B), comprising a soluble siloxane polymer having a double chain structure;
component (C), comprising a trifunctional silane compound containing at least one ethylenically unsaturated double bond;
component (D), comprising an organic peroxide; and
component (E), comprising a monomer containing at least two ethylenically unsaturated double bonds and capable of undergoing radical polymerization,
subsequently curing and firing said at least one prepreg.

**4.** The fire-safe means according to claim 2 or 3, wherein said inorganic fiber is at least one member selected from the group consisting of a tow, a sheet, and a cloth.

**5.** The fire-safe means according to one of the claims 2-4, wherein said matrix composition is at least one member selected from the group consisting of a liquid and a film.

**6.** The fire-safe means according to one of the claims 2-5, wherein said matrix composition comprises:
350 - 750 parts by weight of component (A),
80 - 170 parts by weight of component (B),
25 - 125 parts by weight of component (C),
1 - 4 parts by weight of component (D), and

25 - 125 parts by weight of component (E).

**7.** The fire-safe means according to one of the claims 1-6, wherein at least one surface of the ceramic fiber-reinforced material is treated by at least one process selected from the group consisting of coating, laminating, layering, lacquering, spraying, painting, and covering and firing a glazing agent.

**8.** The fire-safe means according to one of the claims 2-7, wherein
component (A) is an oxide or compound oxide, comprising at least one compound selected from the group consisting of silica, alumina, and titanium oxide,
component (B) is a polysilsesquioxane,
component (C) is at least one member of the group consisting of a γ-acryloxyalkyl trialkoxy silane and a γ-methacryloxyalkyl trialkoxy silane,
component (D) is a peroxide with a threshold temperature of greater than 110° C. so as to produce a half-life of 10 hours,
component (E) is at least one member of the group consisting of a diacrylate of a polyhydric alcohol, a dimethacrylate of a polyhydric alcohol, a triacrylate of a polyhydric alcohol, and a trimethacrylate of a polyhydric alcohol,
wherein said inorganic fiber comprises at least one member selected from the group consisting of glass fiber, alumina fiber, silica fiber, Tyranno fiber, inorganic oxide fiber, silicon carbide fiber, metal fiber, stainless steel fiber, boron fiber, and tungsten fiber.

**9.** The fire-safe means according to claim 8, wherein said inorganic oxide fiber comprises predominantly at least one member selected from the group consisting of alumina and silica.

**10.** The fire-safe means according to one of the claims 1-9, wherein said fire-safe means is a panel, a fixture or said means in a building or in a vehicle, such as for example a vehicle selected from the group comprising an aircraft, a spacecraft, a watercraft, and a land vehicle.

**11.** The fire-safe means according to one of the claims 1-10, wherein said means is curvilinear.

**12.** The fire-safe means according to one of the claims 1-10, wherein said means is flat.

**13.** The fire-safe means according to one of the claims 1-12, wherein said means is employed as at least one member of the group consisting of a structural member, a surface, cladding, a floor, a bulkhead, panelling, a sidewall, a firewall, an interior wall, a ceiling, a door, a dividing wall, a seat, a chair, an instrument panel, a compartment, a control panel, a table, a tray-table, a cabinet, a closet, a desk and a shelf.

**14.** A laminated honeycomb structure having at least one layer formed of a ceramic fiber-reinforced material.

**15.** The laminated honeycomb structure according to claim 14, wherein said ceramic fiber-reinforced material is prepared by firing at least one prepreg formed by impregnating an inorganic fiber with a matrix composition comprising:
component (A), comprising a powdered metal oxide having an average diameter less than 1 μm;
component (B), comprising a soluble siloxane polymer having a double chain structure;
component (C), comprising a trifunctional silane compound containing at least one ethylenically unsaturated double bond;
component (D), comprising an organic peroxide; and
component (E), comprising a monomer containing at least two ethylenically unsaturated double bonds and capable of undergoing radical polymerization.

**16.** The laminated honeycomb structure according to claim 15, wherein said inorganic fiber is at least one member selected from the group consisting of a tow, a sheet, and a cloth.

**17.** The laminated honeycomb structure according to claim 15 or 16, wherein said matrix composition is at least one member selected from the group consisting of a liquid and a film.

**18.** The laminated honeycomb structure according to one of the claims 15-17, wherein said matrix composition comprises:
350 - 750 parts by weight of component (A),
80 - 170 parts by weight of component (B),
25 - 125 parts by weight of component (C),
1 - 4 parts by weight of component (D), and
25 - 125 parts by weight of component (E).

**19.** The laminated honeycomb structure according to one of the claims 14-18, wherein at least one surface of the ceramic fiber-reinforced material is treated by at least one process selected from the group consisting of coating, laminating, layering, lacquering, spraying, painting, and covering and firing a glazing agent.

**20.** The laminated honeycomb structure according to one of the claims 15-19, wherein
component (A) is an oxide or compound oxide, comprising at least one compound selected from the group consisting of silica, alumina, and titanium oxide,
component (B) is a polysilsesquioxane,
component (C) is at least one member of the group consisting of a $\gamma$-acryloxyalkyl trialkoxy silane and a $\gamma$-methacryloxyalkyl trialkoxy silane,
component (D) is a peroxide with a threshold temperature of greater than 110° C. so as to produce a half-life of 10 hours,
component (E) is at least one member of the group consisting of a diacrylate of a polyhydric alcohol, a dimethacrylate of a polyhydric alcohol, a triacrylate of a polyhydric alcohol, and a trimethacrylate of a polyhydric alcohol,
wherein said inorganic fiber comprises at least one member selected from the group consisting of glass fiber, alumina fiber, silica fiber, Tyranno fiber, inorganic oxide fiber, silicon carbide fiber, metal fiber, stainless steel fiber, boron fiber, and tungsten fiber.

**21.** The laminated honeycomb structure according to claim 20, wherein said inorganic oxide fiber comprises predominantly at least one member selected from the group consisting of alumina and silica.

**22.** The laminated honeycomb structure according to one of the claims 14-21, wherein said laminated honeycomb structure is a fire-safe panel, a fire-safe fixture, a fire-safe structure, or one of said structures, panel or fixture in a building or in a vehicle selected from the group comprising an aircraft, a spacecraft, a watercraft, and a land vehicle.

**23.** The laminated honeycomb structure according to one of the claims 14-22, wherein said structure is curvilinear.

**24.** The laminated honeycomb structure according to one of the claims 14-22, wherein said structure is flat.

**25.** The laminated honeycomb structure according to one of the claims 14-24, wherein said structure is employed as at least one member of the group consisting of a structural member, a surface, cladding, a floor, a bulkhead, panelling, a sidewall, a firewall, an interior wall, a ceiling, a door, a dividing wall, a seat, a chair, an instrument panel, a compartment, a control panel, a table, a tray-table, a cabinet, a closet, a desk and a shelf.

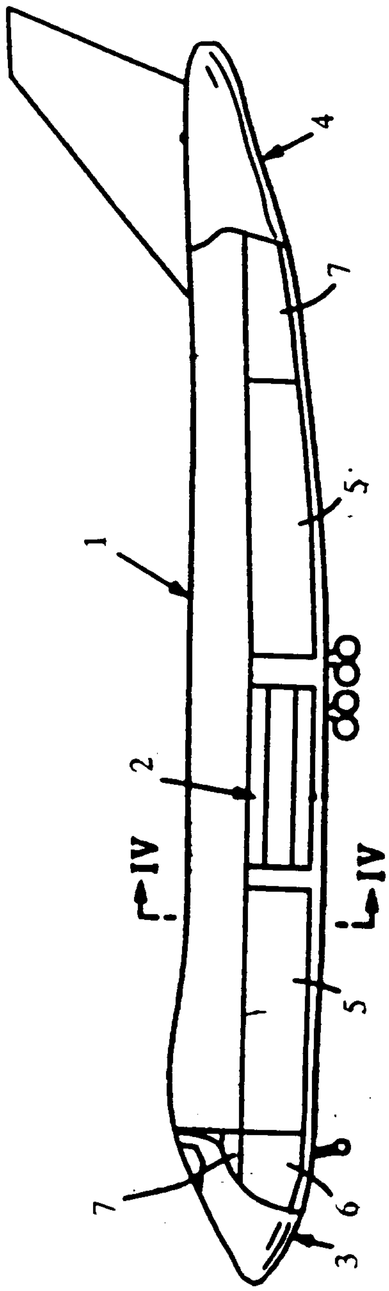


Figure 1

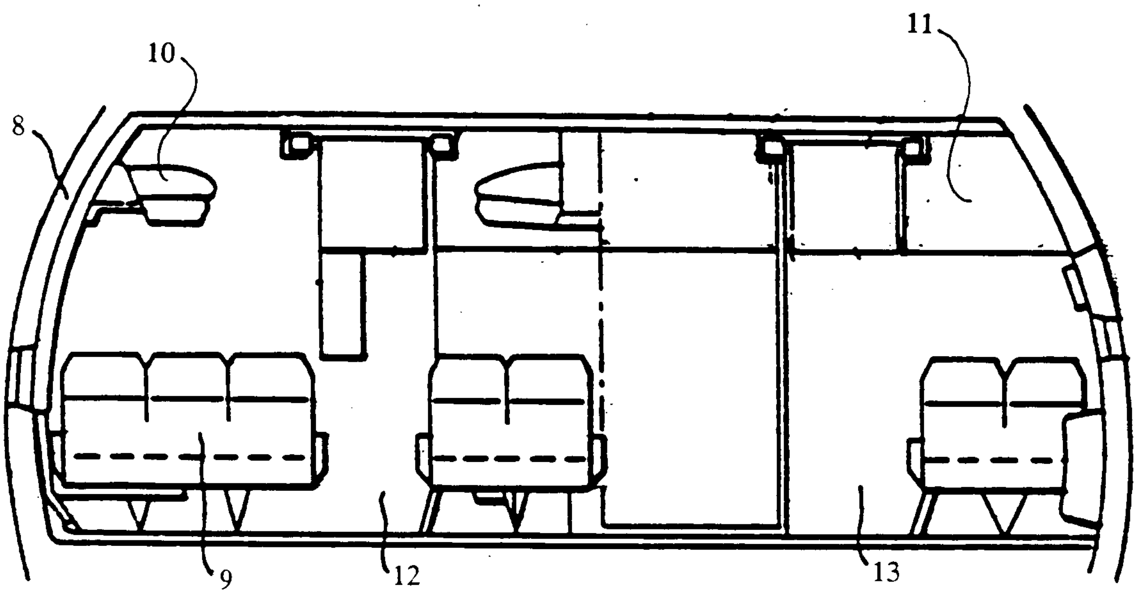


**Figure 2**

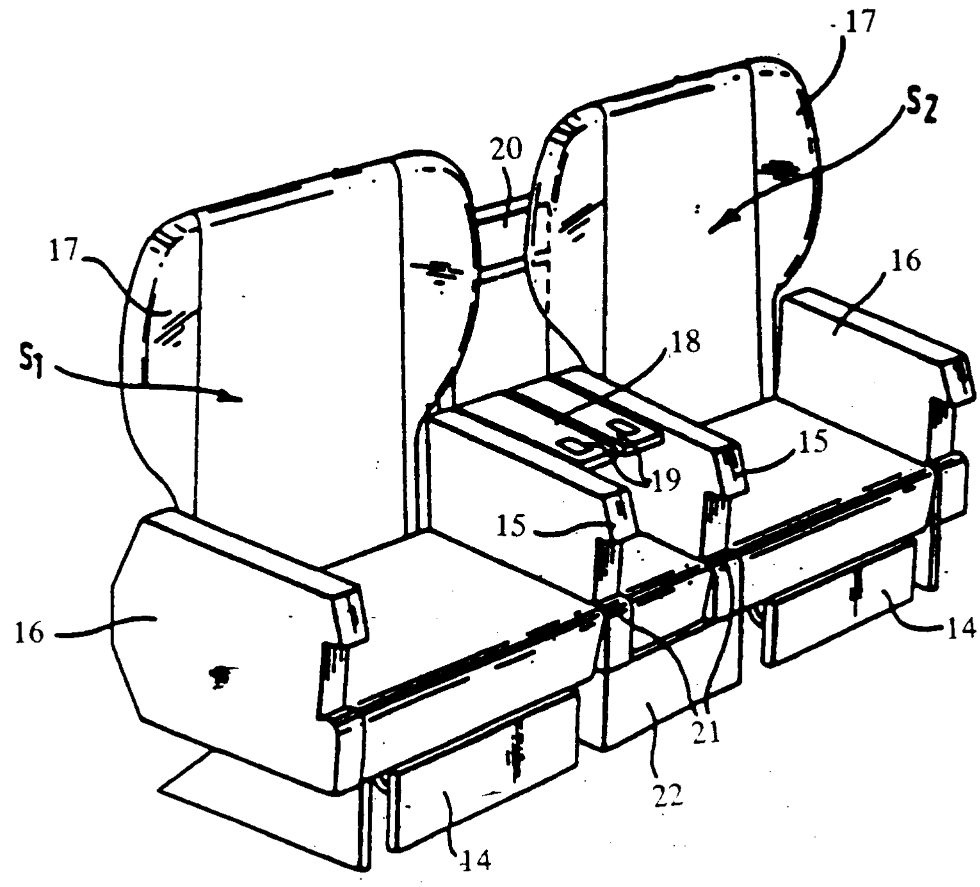


**Figure 3**

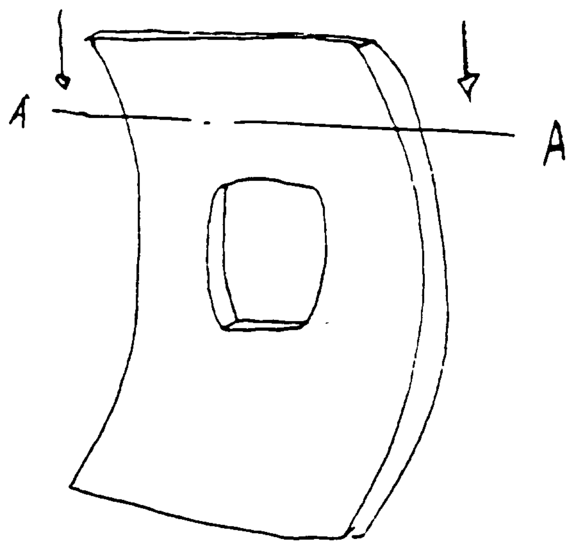


**Figure 4**

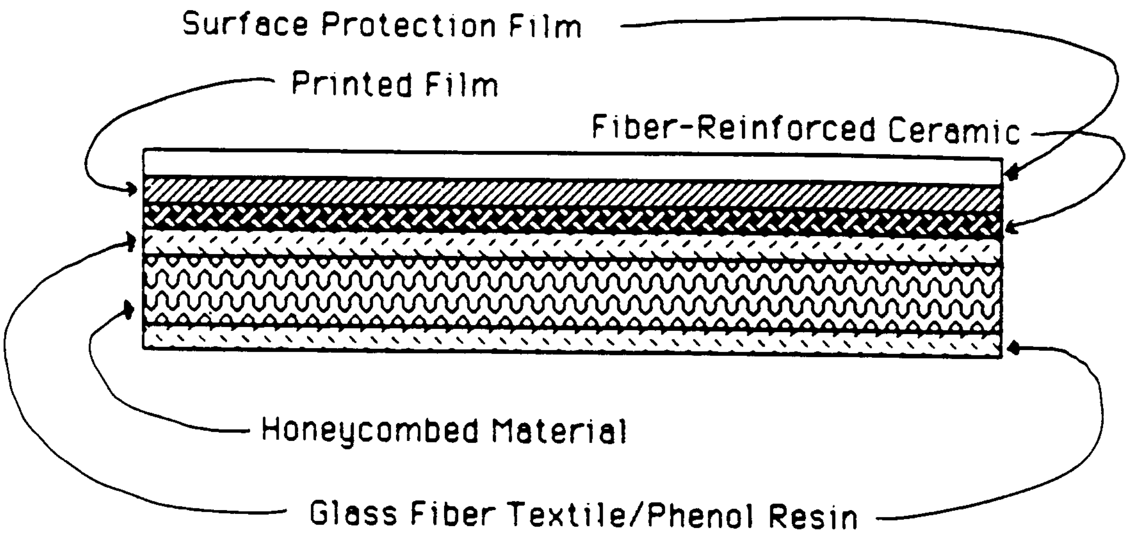
Surface Protection Film
Printed Film
Fiber-Reinforced Ceramic
Honeycombed Material
Glass Fiber Textile/Phenol Resin

**Figure 5**

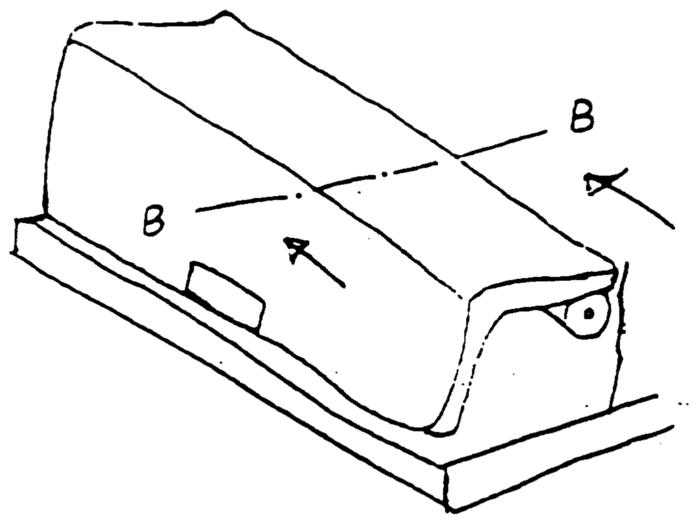


**Figure 6**

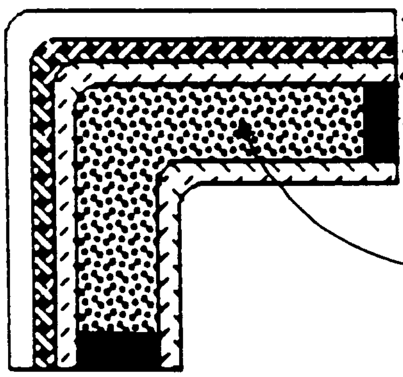
Surface Protection Layer
Fiber-Reinforced Ceramic
Glass Fiber/Phenol Resin
Urethane Foam
Honeycombed Material

**Figure 7**

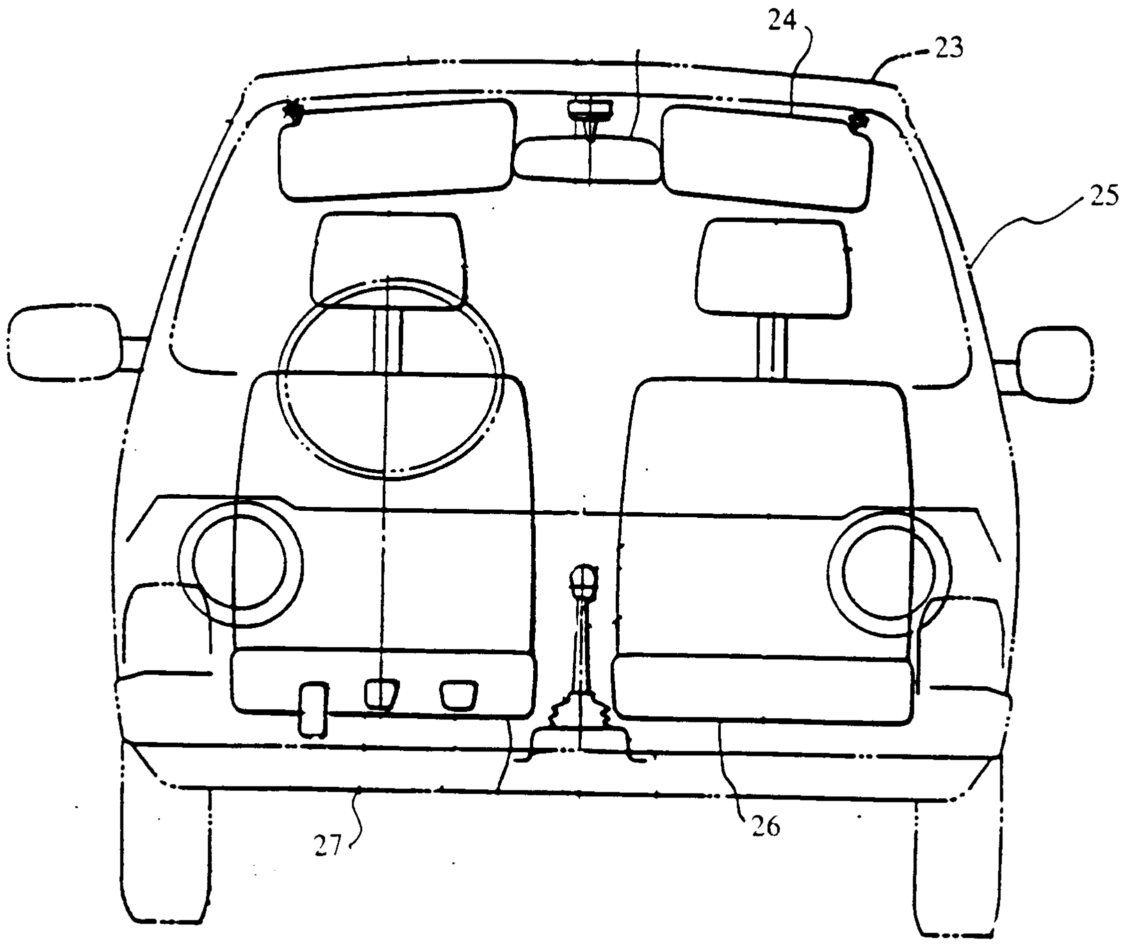


**Figure 8**

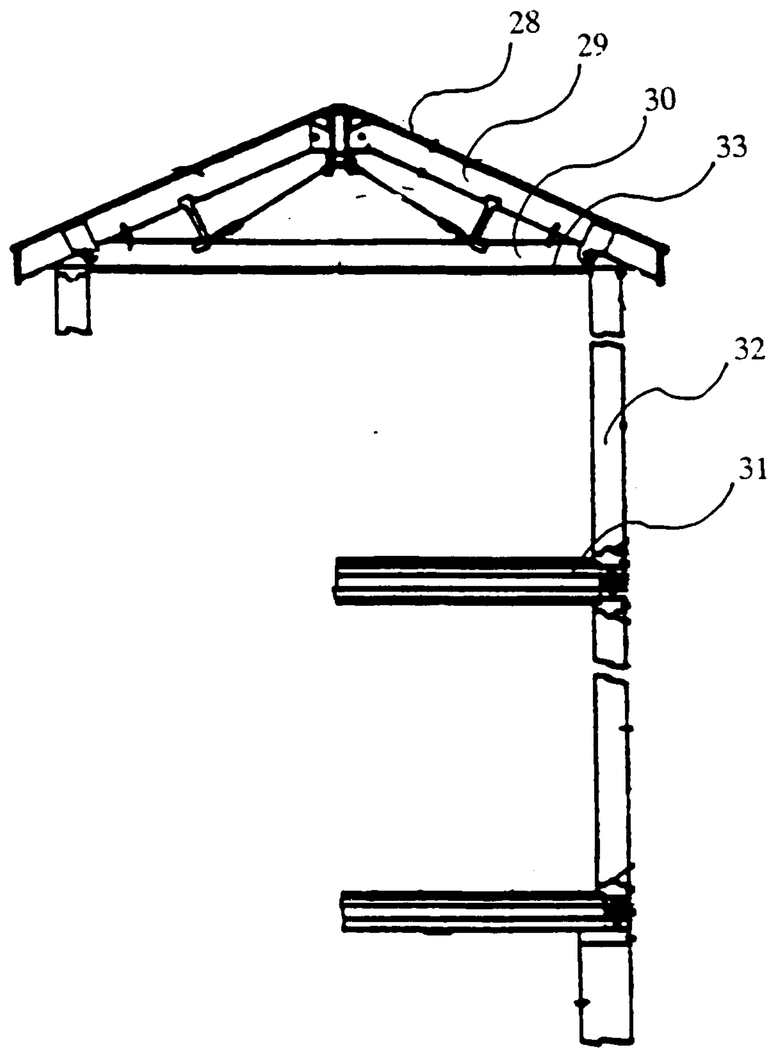


**Figure 9**

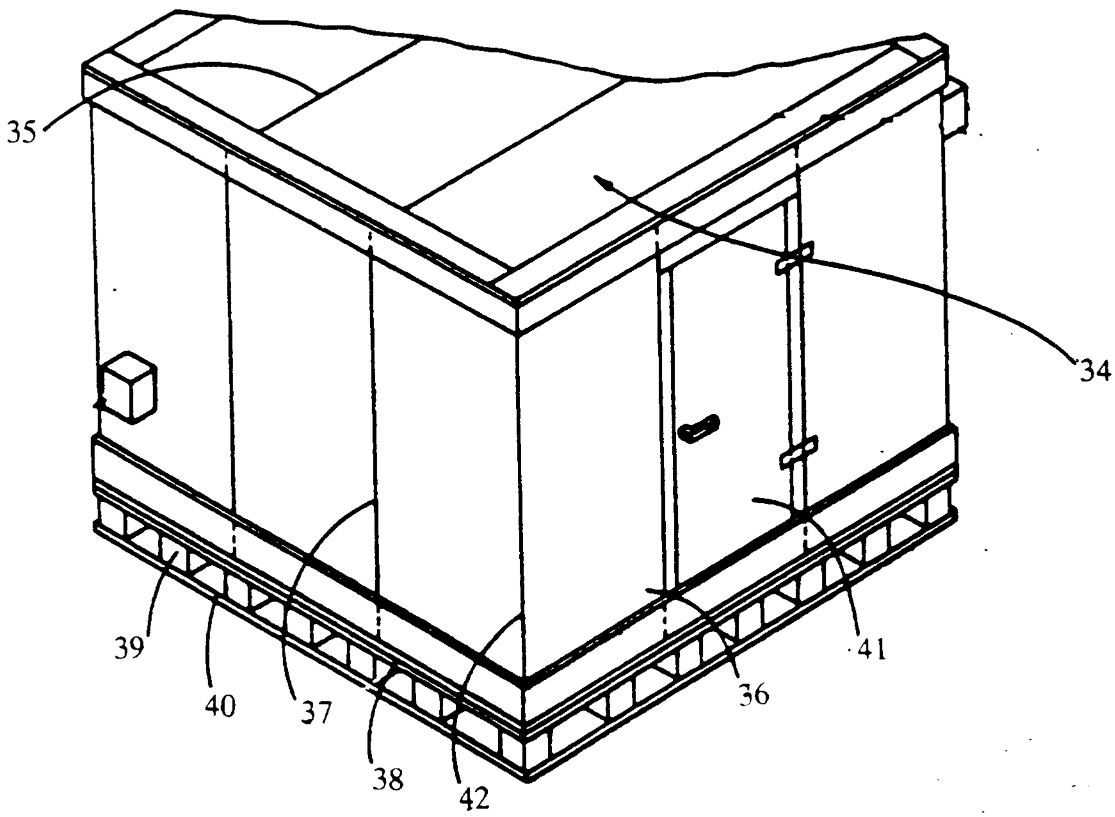


Figure 10

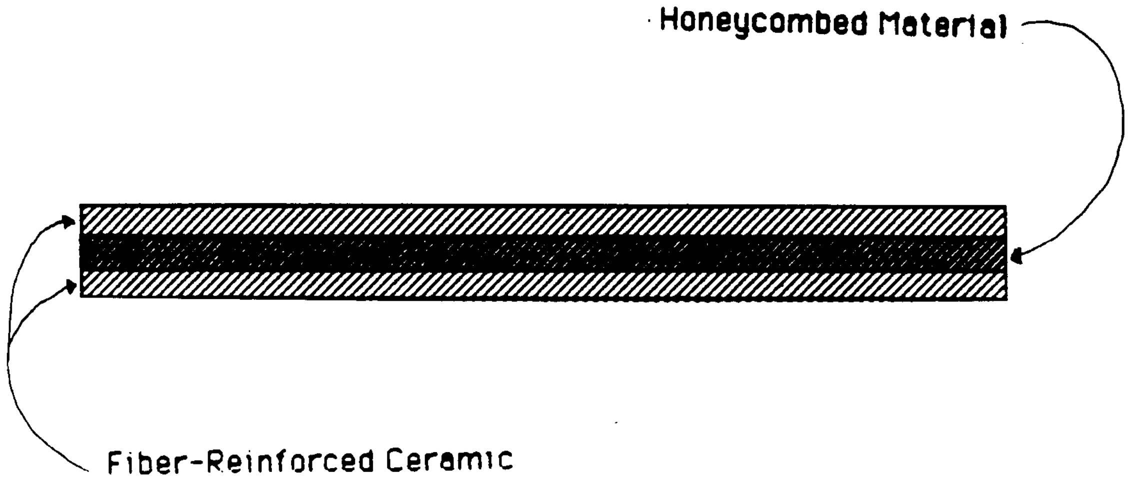


**Figure 11**

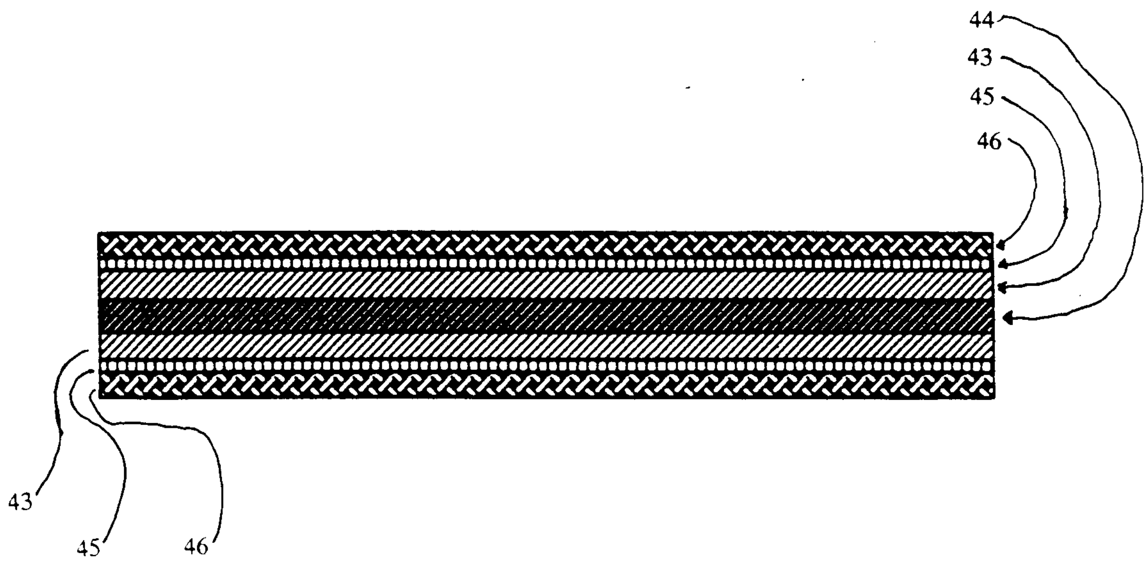


**Figure 12**

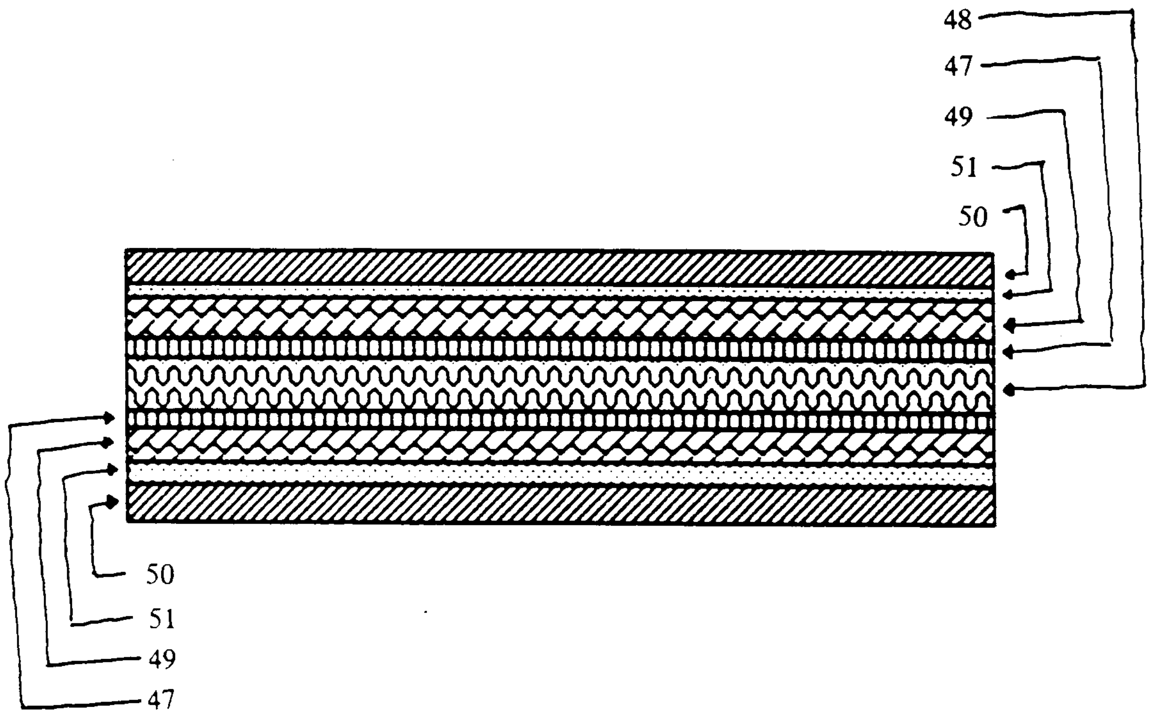


**Figure 13**

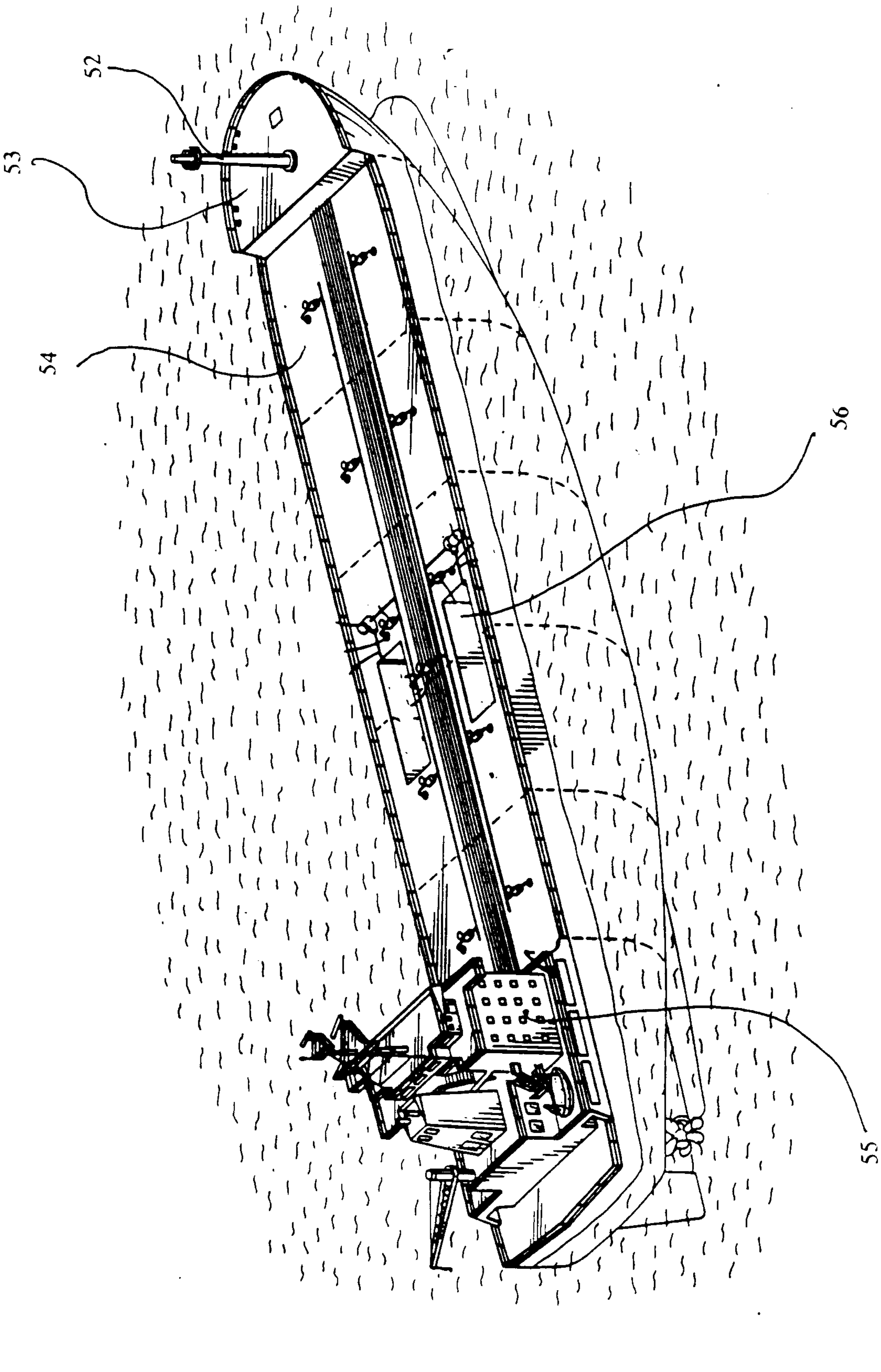


Figure 14

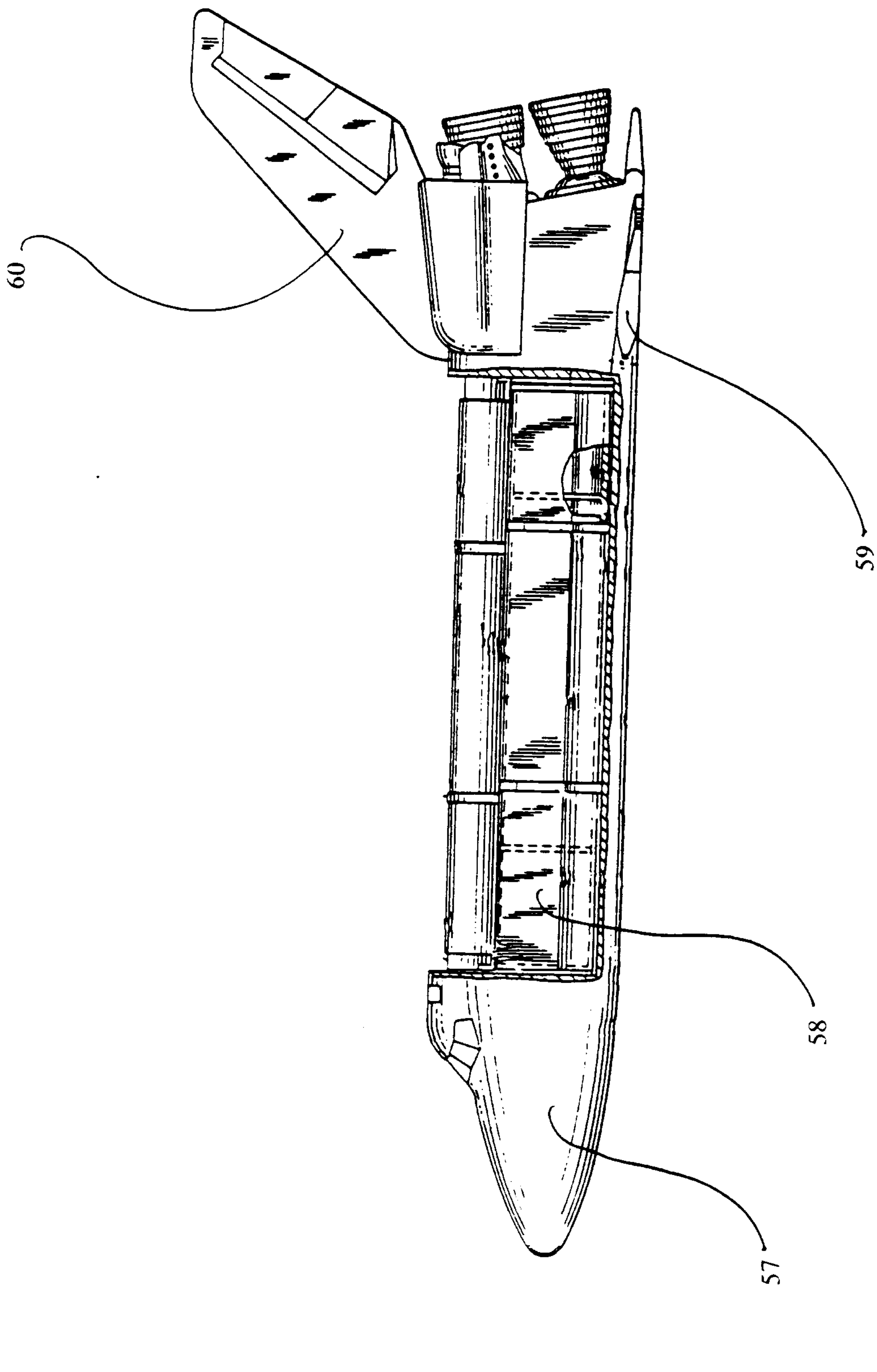


Figure 15

European Patent Office

# EUROPEAN SEARCH REPORT

Application Number
EP 94 20 3772

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-3 930 085 (PASIUK W.T)<br>* claim 1 *<br>* column 1, line 5 - line 68 *<br>--- | 1,7, 10-14, 22-25 | C08J5/24<br>C04B38/00 |
| X | EP-A-0 355 916 (THE DOW CHEMICAL COMPANY)<br>* claim 1 *<br>* page 2, line 1 - line 5 *<br>--- | 1,7, 10-13 | |
| X | EP-A-0 477 505 (DORNIER GMBH)<br>* claim 1 *<br>--- | 14 | |
| D,A | WO-A-92 22509 (HEXCEL CORPORATION)<br>* claims 1,7-9,11-13,30,31 *<br>--- | 1 | |
| D,A | EP-A-0 125 005 (DOW CORNING CORPORATION)<br>* claims *<br>----- | 1 | |
| | | | TECHNICAL FIELDS SEARCHED (Int.Cl.6) |
| | | | C08J<br>C04B |

The present search report has been drawn up for all claims

| Place of search | Date of completion of the search | Examiner |
|---|---|---|
| THE HAGUE | 11 May 1995 | Niaounakis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)